(19) Europäisches Patentamt
European Patent Office
Office européen des brevets

(11) EP 3 227 370 B1

(12) EUROPEAN PATENT SPECIFICATION

(45) Date of publication and mention of the grant of the patent:
**20.11.2019 Bulletin 2019/47**

(21) Application number: **15791120.7**

(22) Date of filing: **21.10.2015**

(51) Int Cl.:
***C08K 5/00*** $^{(2006.01)}$ ***B32B 27/32*** $^{(2006.01)}$
***C08J 5/18*** $^{(2006.01)}$ ***C08K 5/29*** $^{(2006.01)}$
***C08L 23/06*** $^{(2006.01)}$

(86) International application number:
**PCT/US2015/056647**

(87) International publication number:
**WO 2016/089495 (09.06.2016 Gazette 2016/23)**

(54) **POLYMER COMPOSITIONS, SHRINK FILMS, AND METHODS OF MAKING THEREOF**

POLYMERZUSAMMENSETZUNGEN, SCHRUMPFFOLIEN UND VERFAHREN ZUR HERSTELLUNG DAVON

COMPOSITIONS POLYMÈRES, FILMS RÉTRACTABLES, ET LEURS PROCÉDÉS DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2014 US 201462085981 P**

(43) Date of publication of application:
**11.10.2017 Bulletin 2017/41**

(73) Proprietor: **Dow Global Technologies LLC**
**Midland, MI 48674 (US)**

(72) Inventors:
- **LEANO, Mauricio E.**
**Freeport, TX 77541 (US)**
- **ELOWE, Paul R.**
**Midland**
**MI 48674 (US)**
- **LEUGERS, Mary Anne**
**Midland, MI 48642 (US)**
- **PETERSON, Bruce**
**Parkers Prairie, MN 56361 (US)**
- **TOYLI, Matthew**
**Alexandria, MN 56308 (US)**

(74) Representative: **Boult Wade Tennant LLP**
**5th Floor, Salisbury Square House**
**8, Salisbury Square**
**London EC4Y 8AP (GB)**

(56) References cited:
**US-A1- 2005 004 314** **US-A1- 2011 248 225**
**US-B1- 6 312 828**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD

Embodiments of the present disclosure generally relate to polyethylene-based polymer compositions, and more particularly, to polyethylene-based polymer compositions having near-infrared radiation absorbing capabilities, shrink films comprising polyethylene-based polymer compositions, and methods of making thereof.

### BACKGROUND

The shrink packaging generally involves wrapping an article(s) in a heat shrink film to form a package, and then heat shrinking the film by exposing it to sufficient heat to cause shrinkage and intimate contact between the film and article. The heat can be provided by conventional heat sources, such as heated air. However, conventional heat sources like heated air are generally insulators, and therefore, have a low heat transfer rate. This can result in the very long heated air tunnels in order to generate the necessary levels of heating of the film. In addition, heated air tunnels may also continuously lose heat to the environment. Thus, they can result in a lower heat efficiency.

Accordingly, alternative polyethylene-based compositions and shrink films are desired.

### SUMMARY

Disclosed in embodiments herein are polyethylene-based polymer compositions. The polyethylene-based polymer compositions comprise a low density polyethylene having a density of from 0.917 g/cc to 0.935 g/cc and melt index, $I_2$, of from 0.1 g/10 min to 5 g/10 min, a linear low density polyethylene having a density of from 0.900 g/cc to 0.965 g/cc and melt index, $I_2$, of from 0.05 g/10 min to 15 g/10 min, or combinations thereof, a near-infrared absorbent material, and optionally, a medium density polyethylene, a high density polyethylene, or combinations thereof.

Also disclosed in embodiments herein are monolayer films or multilayer films comprising at least one layer. The films comprise a polyethylene-based polymer compositions comprising a low density polyethylene having a density of from 0.917 g/cc to 0.935 g/cc and melt index, $I_2$, of from 0.1 g/10 min to 5 g/10 min, a linear low density polyethylene having a density of from 0.900 g/cc to 0.965 g/cc and melt index, $I_2$, of from 0.05 g/10 min to 15 g/10 min, or combinations thereof, a near-infrared absorbent material, and optionally, a medium density polyethylene, a high density polyethylene, or combinations thereof.

Further disclosed in embodiments herein are methods of making monolayer or multilayer films. The method comprises providing a polyethylene-based polymer composition comprising (i) a low density polyethylene having a density of from 0.917 g/cc to 0.935 g/cc and melt index, $I_2$, of from 0.1 g/10 min to 5 g/10 min, a linear low density polyethylene having a density of from 0.900 g/cc to 0.965 g/cc and melt index, $I_2$, of from 0.05 g/10 min to 15 g/10 min, or combinations thereof, (ii) a near-infrared absorbent material, and (iii) optionally, a medium density polyethylene, a high density polyethylene, or combinations thereof, forming a monolayer film or a multilayer film having at least one layer comprising the polyethylene-based polymer composition.

Even further disclosed in embodiments herein are multilayer shrink films. The multilayer shrink films comprise a core layer and at least one outer layer, and wherein the core layer comprises a low density polyethylene having a density of from 0.917 g/cc to 0.935 g/cc and melt index, 12, of from 0.1 g/10 min to 5 g/10 min, and optionally, a linear low density polyethylene, a medium density polyethylene, a high density polyethylene, or combinations thereof, and wherein the at least one outer layer comprises a near-infrared absorbent material.

Additional features and advantages of the embodiments will be set forth in the detailed description which follows, and in part will be readily apparent to those skilled in the art from that description or recognized by practicing the embodiments described herein, including the detailed description and the claims.

It is to be understood that both the foregoing and the following description describe various embodiments and are intended to provide an overview or framework for understanding the nature and character of the claimed subject matter.

### DETAILED DESCRIPTION

Reference will now be made in detail to embodiments of polyethylene-based polymer compositions, monolayer or multilayer films, articles, and methods thereof. The polyethylene-based polymer compositions described herein are suitable for use in shrink films, for example, monolayer or multilayer shrink films. It is noted, however, that this is merely an illustrative implementation of the embodiments disclosed herein. The embodiments are applicable to other technologies that are susceptible to similar problems as those discussed above. For example, the polyethylene-based polymer compositions described herein may be used in other flexible packaging applications, such as, heavy duty shipping sacks, liners, sacks, stand-up pouches, detergent pouches, sachets, etc., all of which are within the purview of the present

embodiments.

The polyethylene-based polymer compositions are suitable for use in a shrink film. The polyethylene-based polymer composition comprising a low density polyethylene having a density of from 0.917 g/cc to 0.935 g/cc and melt index, $I_2$, of from 0.1 g/10 min to 5 g/10 min, a linear low density polyethylene having a density of from 0.900 g/cc to 0.965 g/cc and melt index, $I_2$, of from 0.05 g/10 min to 15 g/10 min, or combinations thereof, and a near-infrared absorbent material. The term "polyethylene-based" or "ethylene-based," are used interchangeably herein to mean that the composition contains greater than 50 wt.%, at least 60 wt.%, at least 70 wt.%, at least 75 wt.%, at least 80 wt.%, at least 85 wt.%, at least 90 wt.%, at least 95 wt.%, at least 99 wt.%, at least 100 wt.%, based on the total polymer weight present in the composition, of polyethylene polymers. The polyethylene-based polymer composition further comprises, optionally, a medium density polyethylene, a high density polyethylene, or combinations thereof.

The monolayer films disclosed herein comprise a polyethylene-based polymer composition. The polyethylene-based polymer composition comprising a low density polyethylene having a density of from 0.917 g/cc to 0.935 g/cc and melt index, $I_2$, of from 0.1 g/10 min to 5 g/10 min, a linear low density polyethylene having a density of from 0.900 g/cc to 0.965 g/cc and melt index, $I_2$, of from 0.05 g/10 min to 15 g/10 min, or combinations thereof; a near-infrared absorbent material; and, optionally, a medium density polyethylene, a high density polyethylene, or combinations thereof. The monolayer film is a monolayer shrink film, and the terms may be used herein interchangeably.

The multilayer films described herein comprise at least one layer comprising a polyethylene-based polymer composition. The polyethylene-based polymer composition comprising a low density polyethylene having a density of from 0.917 g/cc to 0.935 g/cc and melt index, $I_2$, of from 0.1 g/10 min to 2 g/10 min, a linear low density polyethylene having a density of from 0.900 g/cc to 0.965 g/cc and melt index, $I_2$, of from 0.1 g/10 min to 5 g/10 min, or combinations thereof; a near-infrared absorbent material; and, optionally, a medium density polyethylene, a high density polyethylene, or combinations thereof. The multilayer film is a multilayer shrink film, and the terms may be used herein interchangeably.

In some embodiments, the polyethylene-based polymer composition comprises from 5 to 100 wt.% of the low density polyethylene, based on the total polymer weight present in the composition. All individual values and subranges described above are included and disclosed herein. For example, the polyethylene-based polymer composition may comprise from 5 to 95 wt.%, from 15 to 95 wt.%, from 25 to 95 wt.%, from 35 to 95 wt.%, from 45 to 95 wt.%, from 55 to 95 wt.%, from 65 to 95 wt.%, from 75 to 95 wt.%, or from 80 to 95 wt.%, of the low density polyethylene. In other examples, the polyethylene-based polymer composition may comprise from 5 to 45 wt.%, from 5 to 40 wt.%, from 5 to 35 wt.%, from 5 to 30 wt.%, from 5 to 25 wt.%, or from 5 to 20 wt.%, of the low density polyethylene.

In other embodiments, the polyethylene-based polymer composition comprises from 5 to 100 wt.% of the linear low density polyethylene, based on the total polymer weight present in the composition. All individual values and subranges described above are included and disclosed herein. For example, the polyethylene-based polymer composition may comprise from 5 to 95 wt.%, from 15 to 95 wt.%, from 25 to 95 wt.%, from 35 to 95 wt.%, from 45 to 95 wt.%, from 55 to 95 wt.%, from 65 to 95 wt.%, from 75 to 95 wt.%, or from 80 to 95 wt.%, of the linear low density polyethylene. In other examples, the polyethylene-based polymer composition may comprise from 5 to 45 wt.%, from 5 to 40 wt.%, from 5 to 35 wt.%, from 5 to 30 wt.%, from 5 to 25 wt.%, or from 5 to 20 wt.%, of the linear low density polyethylene.

In further embodiments, the polyethylene-based polymer composition comprises 5 to 100 wt.% of the low density polyethylene and from 5 to 100 wt.% of the linear low density polyethylene, based on the total polymer weight present in the composition. All individual values and subranges described above are included and disclosed herein. For example, the polyethylene-based polymer composition may comprise 5 to 50 wt.%, 5 to 45 wt.%, 10 to 45 wt.%, 15 to 45 wt.%, 20 to 45 wt.%, or 25 to 45 wt.% of the low density polyethylene and from 50 to 95 wt.%, 55 to 95 wt.%, 55 to 90 wt.%, 55 to 85 wt.%, 55 to 80 wt.%, or 55 to 75 wt.% of the linear low density polyethylene. In other examples, the polyethylene-based polymer composition may comprise 50 to 95 wt.%, 55 to 95 wt.%, 60 to 95 wt.%, 65 to 95 wt.%, 70 to 95 wt.%, or 70 to 90 wt.% of the low density polyethylene and from 5 to 50 wt.%, 5 to 45 wt.%, 5 to 40 wt.%, 5 to 35 wt.%, 5 to 30 wt.%, or 10 to 30 wt.% of the linear low density polyethylene.

In some embodiments herein, the polyethylene-based polymer compositions may include LDPE/LDPE blends where one of the LDPE resins has, for example, a relatively higher melt index and the other has, for example, a lower melt index and is more highly branched. The polyethylene-based polymer compositions may also include LLDPE/LLDPE blends, LDPE/LDPE/LLDPE blends, LLDPE/LLDPE/LDPE blends, as well as other combinations useful in a heat shrinkable film.

In some embodiments herein, the polyethylene-based polymer compositions may have an $I_{10}/I_2$ ratio of 3 to 15. All individual values and subranges from 3 to 15 are included and disclosed herein. For example, in some embodiments, the polyethylene-based polymer compositions may have an $I_{10}/I_2$ ratio of 4 to 12. In other embodiments, the polyethylene-based polymer compositions may have an $I_{10}/I_2$ ratio of 6 to 12. In further embodiments, the polyethylene-based polymer compositions may have an $I_{10}/I_2$ ratio of 6 to 10. In even further embodiments, the polyethylene-based polymer compositions may have an $I_{10}/I_2$ ratio of 7 to 9.

In some embodiments herein, the polyethylene-based polymer compositions may have a molecular weight distribution ($M_w/M_n$) of 1.5 to 6. All individual values and subranges from 1.5 to 6 are included and disclosed herein. For

example, in some embodiments, the polyethylene-based polymer compositions may have an $M_w/M_n$ of 1.7 to 5.5. In other embodiments, the polyethylene-based polymer compositions may have an $M_w/M_n$ of 1.9 to 5.0. In further embodiments, the polyethylene-based polymer compositions may have an $M_w/M_n$ of 2.5 to 4.5. In even further embodiments, the polyethylene-based polymer compositions may have an $M_w/M_n$ of 3 to 4.5.

In some embodiments herein, the polyethylene-based polymer compositions may have a molecular weight distribution ($M_Z/M_w$) of from 1.5 to 4.5. All individual values and subranges from 1.5 to 4.5 are included herein and disclosed herein; for example, the polyethylene-based polymer compositions may have a molecular weight distribution ($M_Z/M_w$) of from a lower limit of 1.5, 1.75, 2, 2.5, 2.75 to an upper limit of 2.85, 2.9, 3, 3.15, 3.25, 3.5, 3.65, 3.75, 3.9, 4, 4.25, or 4.5. For example, the polyethylene-based polymer compositions may have a molecular weight distribution ($M_Z/M_w$) of from 1.5 to 4.5, from 2 to 3.5, from 2.5 to 3, or from 2.65 to 2.9.

In some embodiments herein, the polyethylene-based polymer compositions may have a heat of fusion ranging from 132 to 182 J/g. All individual values and subranges from 132 to 182 J/g are included and disclosed herein. For example, in some embodiments, the polyethylene-based polymer compositions may have a heat of fusion ranging from 135 to 175 J/g. In other embodiments, the polyethylene-based polymer compositions may have a heat of fusion ranging from 140 to 165 J/g. In further embodiments, the polyethylene-based polymer compositions may have a heat of fusion ranging from 145 to 155 J/g. Heat of fusion may be measured by differential scanning calorimetry (DSC) or equivalent technique.

In some embodiments herein, the polyethylene-based polymer compositions may have a calculated % crystallinity ranging from 45% - 62%. All individual values and subranges from 45% - 62% are included and disclosed herein. For example, in some embodiments, the polyethylene-based polymer compositions may have a calculated % crystallinity ranging from 47% - 55%. In other embodiments, the polyethylene-based polymer compositions may have a calculated % crystallinity ranging from 47% - 53%. The % crystallinity for polyethylene-based polymer compositions may be calculated using the following equation:

$$\%\ \text{Crystallinity} = \frac{Heat\ of\ fusion\ (J/g)}{292\ J/g}\ x\ 100\%$$

As noted above, the heat of fusion may be measured by differential scanning calorimetry (DSC) or equivalent technique.

The polyethylene-based polymer compositions can be prepared by any suitable means known in the art, including tumble dry-blending, weigh feeding, solvent blending, melt blending via compound or side-arm extrusion, or combinations thereof. The polyethylene-based polymer compositions can also be blended with other polymer materials, such as polypropylene, high pressure ethylene copolymers, such as ethylvinylacetate (EVA) and ethylene acrylic acid, ethylene-styrene interpolymers, so long as the necessary rheology and molecular architecture as evidenced by multiple detector GPC are maintained. Other polymer materials can also be blended with the polyethylene-based polymer compositions described herein to modify processing, film strength, heat seal, or adhesion characteristics as is generally known in the art.

Low Density Polyethylene (LDPE)

The low density polyethylene may have a density of from 0.917 g/cc to 0.935 g/cc. All individual values and subranges are included and disclosed herein. For example, in some embodiments, the low density polyethylene may have a density of from 0.917 g/cc to 0.930 g/cc, 0.917 g/cc to 0.925 g/cc, or 0.919 g/cc to 0.925 g/cc. In other embodiments, the low density polyethylene may have a density of from 0.920 g/cc to 0.935 g/cc, 0.922 g/cc to 0.935 g/cc, or 0.925 g/cc to 0.935 g/cc. The low density polyethylene may have a melt index, or I2, of from 0.1 g/10 min to 5 g/10 min. All individual values and subranges are included and disclosed herein. For example, in some embodiments, the low density polyethylene may have a melt index from 0.1 to 4 g/10 min, 0.1 to 3.5 g/10 min, 0.1 to 3 g/10 min, 0.1 g/10 min to 2.5 g/10 min, 0.1 g/10 min to 2 g/10 min, 0.1 g/10 min to 1.5 g/10 min. In other embodiments, the LDPE has a melt index from 0.1 g/10 min to 1.1 g/10 min. In further embodiments, the LDPE has a melt index of 0.2-0.9 g/10 min.

The low density polyethylene may have a melt strength of from 10 cN to 35 cN. All individual values and subranges are included and disclosed herein. For example, in some embodiments, the low density polyethylene may have a melt strength of from 10 cN to 30 cN, from 10 cN to 28 cN, from 10 cN to 25 cN, from 10 cN to 20 cN, or from 10 cN to 18 cN. In other embodiments, the low density polyethylene may have a melt strength of from 12 cN to 30 cN, from 15 cN to 30 cN, from 18 cN to 30 cN, from 20 cN to 30 cN, or from 22 cN to 30 cN. In further embodiments, the low density polyethylene may have a melt strength of from 12 cN to 28 cN, from 12 cN to 25 cN, from 15 cN to 25 cN, from 15 cN to 23 cN, or from 17 cN to 23 cN.

The low density polyethylene may have a molecular weight distribution (MWD or Mw/Mn) of from 5 to 20. All

individual values and subranges are included and disclosed herein. For example, in some embodiments, the low density polyethylene may have a MWD of from 5 to 18, from 5 to 15, from 5 to 12, from 5 to 10, or from 5 to 8. In other embodiments, the low density polyethylene may have a MWD of from 8 to 20, from 10 to 20, from 12 to 20, from 15 to 20, or from 17 to 20. In further embodiments, the low density polyethylene may have a MWD of from 8 to 18, from 8 to 15, from 10 to 18, or from 10 to 15. The MWD may be measured according to the triple detector gel permeation chromatography (TDGPC) test method outlined below.

The LDPE may include branched polymers that are partly or entirely homopolymerized or copolymerized in autoclave and/or tubular reactors, or any combination thereof, using any type of reactor or reactor configuration known in the art, at pressures above 14,500 psi (100 MPa) with the use of free-radical initiators, such as peroxides (see for example U.S. Pat. No. 4,599,392). In some embodiments, the LDPE may be made in an autoclave process under single phase conditions designed to impart high levels of long chain branching, such as described in PCT patent publication WO 2005/023912. Examples of suitable LDPEs may include, but are not limited to, ethylene homopolymers, and high pressure copolymers, including ethylene interpolymerized with, for example, vinyl acetate, ethyl acrylate, butyl acrylate, acrylic acid, methacrylic acid, carbon monoxide, or combinations thereof. The ethylene may also be interpolymerized with an alpha-olefin comonomer, for example, at least one C3-C20 alpha-olefin, such as propylene, isobutylene, 1-butene, 1-pentene, 1-hexene, and mixtures thereof. Exemplary LDPE resins may include, but is not limited to, resins sold by The Dow Chemical Company, such as, LDPE 1321 resins, LDPE 6211 resins, LDPE 6621 resins, or AGILITY™ 1000 and 2001 resins, resins sold by Westlake Chemical Corporation (Houston, TX), such as EF412, EF602, EF403, or EF601, resins sold by LyondellBasell Industries (Houston, TX), such as, PETROTHENE™ M2520 or NA940, and resins sold by The ExxonMobil Chemical Company (Houston, TX) such as, LDPE LD 051.LQ or NEXXSTAR™ LDPE-00328. Other exemplary LDPE resins are described in WO 2014/051682 and WO 2011/019563.

<u>Linear Low Density Polyethylene (LLDPE)</u>

In some embodiments, the linear low density polyethylene has a polymer backbone that may lack measurable or demonstrable long chain branches. As used herein, "long chain branching" means branches having a chain length greater than that of any short chain branches, which are a result of comonomer incorporation. The long chain branch can be about the same length or as long as the length of the polymer backbone. In other embodiments, the linear low density polyethylene may have measurable or demonstrable long chain branches. For example, in some embodiments, the linear low density polyethylene is substituted with an average of from 0.001 long chain branches/10,000 carbons to 3 long chain branches/10,000 carbons, from 0.001 long chain branches/10,000 carbons to 1 long chain branches/10,000 carbons, from 0.05 long chain branches/10,000 carbons to 1 long chain branches/10,000 carbons. In other embodiments, the linear low density polyethylene is substituted with an average of less than 1 long chain branches/10,000 carbons, less than 0.5 long chain branches/10,000 carbons, or less than 0.05 long chain branches/10,000 carbons, or less than 0.01 long chain branches/10,000 carbons. Long chain branching (LCB) can be determined by conventional techniques known in the industry, such as 13C nuclear magnetic resonance (13C NMR) spectroscopy, and can be quantified using, for example, the method of Randall (Rev. Macromol. Chem. Phys., C29 (2 & 3), p. 285-297). Two other methods that may be used include gel permeation chromatography coupled with a low angle laser light scattering detector (GPC-LALLS), and gel permeation chromatography coupled with a differential viscometer detector (GPC-DV). The use of these techniques for long chain branch detection, and the underlying theories, have been well documented in the literature. *See, for example,* Zimm, B. H. and Stockmayer, W. H., J. Chem. Phys., 17, 1301 (1949) and Rudin A., Modern Methods of Polymer Characterization, John Wiley & Sons, New York (1991), pp. 103-112.

In some embodiments, the linear low density polyethylene may be a homogeneously branched or heterogeneously branched and/or unimodal or multimodal (e.g., bimodal) polyethylene. As used herein, "unimodal" refers to the MWD in a GPC curve does not substantially exhibit multiple component polymers (i.e., no humps, shoulders or tails exist or are substantially discernible in the GPC curve). In other words, the degree of separation is zero or substantially close to zero. As used herein, "multimodal" refers to the MWD in a GPC curve exhibits two or more component polymers, wherein one component polymer may even exist as a hump, shoulder or tail relative to the MWD of the other component polymer. The linear low density polyethylene comprises ethylene homopolymers, interpolymers of ethylene and at least one comonomer, and blends thereof. Examples of suitable comonomers may include alpha-olefins. Suitable alpha-olefins may include those containing from 3 to 20 carbon atoms (C3-C20). For example, the alpha-olefin may be a C4-C20 alpha-olefin, a C4-C12 alpha-olefin, a C3-C10 alpha-olefin, a C3-C8 alpha-olefin, a C4-C8 alpha-olefin, or a C6-C8 alpha-olefin. In some embodiments, the linear low density polyethylene is an ethylene/alpha-olefin copolymer, wherein the alpha-olefin is selected from the group consisting of propylene, 1-butene, 1-pentene, 1-hexene, 4-methyl-1-pentene, 1-heptene, 1-octene, 1-nonene and 1-decene. In other embodiments, the linear low density polyethylene is an ethylene/alpha-olefin copolymer, wherein the alpha-olefin is selected from the group consisting of propylene, 1-butene, 1-hexene, and 1-octene. In further embodiments, the linear low density polyethylene is an ethylene/alpha-olefin copolymer, wherein the alpha-olefin is selected from the group consisting of 1-hexene and 1-octene. In even further embodiments,

the linear low density polyethylene is an ethylene/alpha-olefin copolymer, wherein the alpha-olefin is 1-octene. In even further embodiments, the linear low density polyethylene is a substantially linear ethylene/alpha-olefin copolymer, wherein the alpha-olefin is 1-octene. In some embodiments, the linear low density polyethylene is an ethylene/alpha-olefin copolymer, wherein the alpha-olefin is 1-butene.

In some embodiments, the linear low density polyethylene is an ethylene/alpha-olefin copolymer that may comprise greater than 50%, by weight, of the units derived from ethylene. All individual values and subranges of greater than 50%, by weight, are included and disclosed herein. For example, the linear low density polyethylene is an ethylene/alpha-olefin copolymer that may comprise at least 60%, at least 70%, at least 80%, at least 90%, at least 92%, at least 95%, at least 97%, at least 98%, at least 99%, at least 99.5%, from greater than 50% to 99%, from greater than 50% to 97%, from greater than 50% to 94%, from greater than 50% to 90%, from 70% to 99.5%, from 70% to 99%, from 70% to 97% from 70% to 94%, from 80% to 99.5%, from 80% to 99%, from 80% to 97%, from 80% to 94%, from 80% to 90%, from 85% to 99.5%, from 85% to 99%, from 85% to 97%, from 88% to 99.9%, 88% to 99.7%, from 88% to 99.5%, from 88% to 99%, from 88% to 98%, from 88% to 97%, from 88% to 95%, from 88% to 94%, from 90% to 99.9%, from 90% to 99.5% from 90% to 99%, from 90% to 97%, from 90% to 95%, from 93% to 99.9%, from 93% to 99.5% from 93% to 99%, or from 93% to 97%, by weight, of the units derived from ethylene. The linear low density polyethylene is an ethylene/alpha-olefin copolymer that may comprise less than 30%, by weight, of units derived from one or more alpha-olefin comonomers. All individual values and subranges of less than 30%, by weight, are included herein and disclosed herein. For example, the linear low density polyethylene is an ethylene/alpha-olefin copolymer that may comprise less than 25%, less than 20%, less than 18%, less than 15%, less than 12%, less than 10%, less than 8%, less than 5%, less than 4%, less than 3%, from 0.2 to 15 %, 0.2 to 12%, 0.2 to 10%, 0.2 to 8%, 0.2 to 5%, 0.2 to 3%, 0.2 to 2%, 0.5 to 12%, 0.5 to 10%, 0.5 to 8%, 0.5 to 5%, 0.5 to 3%, 0.5 to 2.5%, 1 to 10%, 1 to 8%, 1 to 5%, 1 to 3%, 2 to 10%, 2 to 8%, 2 to 5%, 3.5 to 12%, 3.5 to 10%, 3.5 to 8%, 3.5% to 7%, or 4 to 12%, 4 to 10%, 4 to 8%, or 4 to 7%, by weight, of units derived from one or more alpha-olefin comonomers. The comonomer content may be measured using any suitable technique, such as techniques based on nuclear magnetic resonance ("NMR") spectroscopy, and, for example, by 13C NMR analysis as described in U.S. Patent 7,498,282.

In some embodiments, the linear low density polyethylene is an ethylene/alpha-olefin copolymer that may comprise at least 90 percent by moles of units derived from ethylene. All individual values and subranges from at least 90 mole percent are included herein and disclosed herein; for example, the linear low density polyethylene is an ethylene/alpha-olefin copolymer that may comprise at least 93 percent, at least 95 percent, at least 96 percent, at least 97 percent, at least 98 percent, at least 99 percent, by moles, of units derived from ethylene; or in the alternative, the linear low density polyethylene is an ethylene/alpha-olefin copolymer that may comprise from 85 to 99.5 percent, from 85 to 99 percent, from 85 to 97 percent, from 85 to 95 percent, from 88 to 99.5 percent, from 88 to 99 percent, from 88 to 97 percent, from 88 to 95 percent, from 90 to 99.5 percent, from 90 to 99 percent, from 90 to 97 percent, from 90 to 95 percent, from 92 to 99.5, from 92 to 99 percent, from 92 to 97 percent, from 95 to 99.5, from 95 to 99 percent, from 97 to 99.5 percent, or from 97 to 99 percent, by moles, of units derived from ethylene. The linear low density polyethylene is an ethylene/alpha-olefin copolymer that may comprise less than 15 percent by moles of units derived from one or more a-olefin comonomers. All individual values and subranges from less than 15 mole percent are included herein and disclosed herein. For example, the linear low density polyethylene is an ethylene/alpha-olefin copolymer that may comprise less than 12 percent, less than 10 percent, less than 8 percent, less than 7 percent, less than 5 percent, less than 4 percent, or less than 3 percent, by moles, of units derived from one or more alpha-olefin comonomers; or in the alternative, the linear low density polyethylene is an ethylene/alpha-olefin copolymer that may comprise from 0.5 to 15 percent, from 0.5 to 12 percent, from 0.5 to 10 percent, 0.5 to 8 percent, 0.5 to 5 percent, 0.5 to 3 percent, 1 to 12 percent, 1 to 10 percent, 1 to 8 percent, 1 to 5 percent, 2 to 12 percent, 2 to 10 percent, 2 to 8 percent, 2 to 5 percent, 3 to 12 percent, 3 to 10 percent, 3 to 7 percent, by moles of units derived from one or more alpha-olefin comonomers. The comonomer content may be measured using any suitable technique, such as techniques based on nuclear magnetic resonance ("NMR") spectroscopy, and, for example, by 13C NMR analysis as described in U.S. Patent 7,498,282.

Other examples of suitable linear low density polyethylene include substantially linear ethylene polymers, which are further defined in U.S. Pat. No. 5,272,236, U.S. Pat. No. 5,278,272, U.S. Pat. No. 5,582,923, U.S. Pat. No. 5,733,155, and EP2653392; homogeneously branched linear ethylene polymer compositions, such as those in U.S. Pat. No. 3,645,992; heterogeneously branched ethylene polymers, such as those prepared according to the process disclosed in U.S. Pat. No. 4,076,698; and/or blends thereof (such as those disclosed in U.S. Pat. No. 3,914,342 or U.S. Pat. No. 5,854,045. In some embodiments, the linear low density polyethylene may include ELITE™, ELITE™ AT, ATTANE™, AFFINITY™, FLEXOMER™, or DOWLEX™ resins sold by The Dow Chemical Company, including, for example, ELITE™ 5100G or 5400G resins, ELITE™ AT 6401, ATTANE™ 4201 or 4202 resins, AFFINITY™ 1840, and DOWLEX™ 2020, 2045G, 2049G, or 2685 resins; EXCEED™ or ENABLE™ resins sold by Exxon Mobil Corporation, including, for example, EXCEED™ 1012, 1018 or 1023JA resins, and ENABLE™ 27-03, 27-05, or 35-05 resins; linear low density polyethylene resins sold by Westlake Chemical Corporation, including, for example, LLDPE LF1020 or HIFOR Xtreme™ SC74836 resins; linear low density polyethylene resins sold by LyondellBasell Industries, including, for example, PETROTHENE™

GA501 and LP540200 resins, and ALATHON™ L5005 resin; linear low density polyethylene resins sold by Nova Chemicals Corp., including, for example, SCLAIR™ FP120 and NOVAPOL™ TF-Y534; linear low density polyethylene resins sold by Chevron Phillips Chemical Company, LLC, including, for example, mPACT™ D139 or D350 resins and MARFLEX™ HHM TR-130 resin; linear low density polyethylene resins sold by Borealis AG, including, for example, BORSTAR™ FB 2310 resin.

The linear low density polyethylene can be made via gas-phase, solution-phase, or slurry polymerization processes, or any combination thereof, using any type of reactor or reactor configuration known in the art, e.g., fluidized bed gas phase reactors, loop reactors, stirred tank reactors, batch reactors in parallel, series, and/or any combinations thereof. In some embodiments, gas or slurry phase reactors are used. Suitable linear low density polyethylene may be produced according to the processes described at pages 15-17 and 20-22 in WO 2005/111291 A1. The catalysts used to make the linear low density polyethylene described herein may include Ziegler-Natta, chrome, metallocene, constrained geometry, or single site catalysts. In some embodiments, the LLDPE may be a znLLDPE, which refers to linear polyethylene made using Ziegler-Natta catalysts, a uLLDPE or "ultra linear low density polyethylene," which may include linear polyethylenes made using Ziegler-Natta catalysts, or a mLLDPE, which refers to LLDPE made using metallocene or constrained geometry catalyzed polyethylene. In some embodiments, unimodal LLDPE may be prepared using a single stage polymerization, e.g. slurry, solution, or gas phase polymerization. In some embodiments, the unimodal LLDPE may be prepared via solution polymerization. In other embodiments, the unimodal LLDPE may be prepared via slurry polymerization in a slurry tank. In another embodiment, the unimodal LLDPE may be prepared in a loop reactor, for example, in a single stage loop polymerization process. Loop reactor processes are further described in WO/2006/045501 or WO2008104371. Multimodal (e.g. bimodal) polymers can be made by mechanical blending of two or more separately prepared polymer components or prepared in-situ in a multistage polymerization process. Both mechanical blending and preparation in-situ. In some embodiments, a multimodal LLDPE may be prepared in-situ in a multistage, i.e. two or more stage, polymerization or by the use of one or more different polymerization catalysts, including single-, multi- or dual site catalysts, in a one stage polymerization. For example, the multimodal LLDPE is produced in at least two-stage polymerization using the same catalyst, for e.g. a single site or Ziegler-Natta catalyst, as disclosed in U.S. Patent 8,372,931. Thus, for example two solution reactors, two slurry reactors, two gas phase reactors, or any combinations thereof, in any order can be employed, such as disclosed in U.S. Pat. Nos. 4,352,915 (two slurry reactors), 5,925,448 (two fluidized bed reactors), and 6,445,642 (loop reactor followed by a gas phase reactor). However, in other embodiments, the multimodal polymer, e.g. LLDPE, may be made using a slurry polymerization in a loop reactor followed by a gas phase polymerization in a gas phase reactor, as disclosed in EP 2653392 A1.

In embodiments herein, the linear low density polyethylene has a density of 0.900 to 0.965 g/cc. All individual values and subranges from 0.900 to 0.965 g/cc are included and disclosed herein. For example, in some embodiments, the linear low density polyethylene has a density of 0.910 to 0.935 g/cc, 0.910 to 0.930 g/cc, 0.910 to 0.927 g/cc, 0.910 to 0.925 g/cc, or 0.910 to 0.920 g/cc. In other embodiments, the linear low density polyethylene has a density of 0.915 to 0.940 g/cc, 0.915 to 0.935 g/cc, 0.915 to 0.930 g/cc, 0.915 to 0.927 g/cc, or 0.915 to 0.925 g/cc. In further embodiments, the linear low density polyethylene has a density of 0.930 to 0.965 g/cc, or 0.932 to 0.950 g/cc, 0.932 to 0.940 g/cc or 0.932 to 0.938 g/cc. Densities disclosed herein are determined according to ASTM D-792.

In embodiments herein, the linear low density polyethylene has a melt index, or I2, of 0.05 g/10 min to 15 g/10 min. All individual values and subranges from 0.05 g/10 min to 15 g/10 min are included and disclosed herein. For example, in some embodiments, the linear low density polyethylene has a melt index of 0.05 g/10 min to 10 g/10 min, 0.05 g/10 min to 5 g/10 min, 0.1 g/10 min to 3 g/10 min, 0.1 g/10 min to 2 g/10 min, 0.1 g/10 min to 1.5 g/10 min, or 0.1 g/10 min to 1.2 g/10 min. In other embodiments, the linear low density polyethylene has a melt index of 0.2 g/10 min to 15 g/10 min, 0.2 g/10 min to 10 g/10 min, 0.2 g/10 min to 5 g/10 min, 0.2 g/10 min to 3 g/10 min, 0.2 g/10 min to 2 g/10 min, 0.2 g/10 min to 1.5 g/10 min, or 0.2 g/10 min to 1.2 g/10 min. Melt index, or I2, is determined according to ASTM D1238 at 190°C, 2.16 kg.

In some embodiments, the linear low density polyethylene may have a melt index ratio, I10/I2, of from 6 to 20. All individual values and subranges are included and disclosed herein. For example, the linear low density polyethylene may have a melt index ratio, I10/I2, of from 7 to 20, from 9 to 20, from 10 to 20, from 12 to 20, or from 15 to 20. In other embodiments, the linear low density polyethylene may have a melt index ratio, I10/I2, of less than 20, less than 15, less than 12, less than 10, or less than 8. In further embodiments, the linear low density polyethylene may have a melt index ratio, I10/I2, of from 6 to 18, from 6 to 16, from 6 to 15, from 6 to 12, or from 6 to 10. In even further embodiments, the linear low density polyethylene may have a melt index ratio, I10/I2, of from 7 to 18, from 7 to 16, from 8 to 15, from 8 to 14, or from 10 to 14.

In some embodiments, the linear low density polyethylene may have a melt index ratio, I21/I2, of from 20 to 80. All individual values and subranges are included and disclosed herein. For example, the linear low density polyethylene may have a melt index ratio, I21/I2, of from 20 to 75, 20 to 70, 20 to 65, 20 to 60, 20 to 55, 20 to 50, 25 to 75, 25 to 70, 25 to 65, 25 to 60, 25 to 55, 25 to 50, 30 to 80, 30 to75, 30 to 70, 30 to 65, 30 to, 60, 30 to 55, 30 to 50, 35 to 80, 35 to 75, 35 to 70, 35 to 65, 35 to 60, or 35 to 55 g/10 min. In other embodiments, the linear low density polyethylene may

have a melt index ratio, 121/12, of less than 50, less than 47, less than 45, less than 42, less than 40, less than 35, less than 30. In further embodiments, the linear low density polyethylene may have a melt index ratio, 121/12, of 20 to 40, 20 to 37, 22 to 37, 22 to 35, 25 to 35, or 25 to 30.

In some embodiments, the linear low density polyethylene may have an Mw/Mn ratio of less than 10.0. All individual values and subranges are included and disclosed herein. For example, the linear low density polyethylene may have an Mw/Mn ratio of less than 9.0, less than 7.0, less than 6.0, less than 5.5, less than 5.0, less than 4.5, less than 4.0, or less than 3.8. In other embodiments, the linear low density polyethylene may have an Mw/Mn ratio of from 2.0 to 10.0, from 2.0 to 8.0, from 2.0 to 6.0, 2.0 to 5.5, 2.0 to 5.0, 2.0 to 4.5, 2.0 to 4.0, 2.2 to 6.0, 2.2 to 5.5, 2.2 to 5.0, 2.2 to 4.5, 2.2 to 4.0, 2.5 to 6.0, 2.5 to 5.5, 2.5 to 5.0, 2.5 to 4.5, or 2.5 to 4.0. In further embodiments, the linear low density polyethylene may have an Mw/Mn ratio of from 3.0 to 5.5, 3.0 to 4.5, 3.0 to 4.0, 3.2 to 5.5, 3.2 to 5, or 3.2 to 4.5. The Mw/Mn ratio may be determined by conventional gel permeation chromatography (GPC) as outlined below.

In some embodiments, the linear low density polyethylene may have an Mz/Mw ratio of 1.5 to 6.0. All individual values and subranges are included and disclosed herein. The linear low density polyethylene can range from a lower limit of 1.5, 1.75, 2.0, 2.5, 2.75, 3.0, or 3.5 to an upper limit of 1.65, 1.85, 2.0, 2.55, 2.90, 3.34, 3.79, 4.0, 4.3, 4.5, 5.0, 5.25, 5.5, 5.8, 6.0. For example, in some embodiments, the linear low density polyethylene may have an Mz/Mw ratio of 1.5 to 5.5, 1.5 to 5.0, 1.5 to 4.0, 1.5 to 3.5, 1.5 to 3.0, or from 1.5 to 2.5.

Near-Infrared (NIR) Absorbent Material

The near infrared absorbent material includes organic or inorganic materials that absorb radiation at wavelengths of from 700 nm to 3000 nm. The near infrared absorbent material may have at least 3% absorption (97% transmittance) within the 700 nm to 3000 nm. In some embodiments, the near infrared absorbent material may have at least 5% (95% transmittance), at least 10% (90% transmittance), at least 15% (85% transmittance), at least 20% (80% transmittance), at least 25% absorption (75% transmittance), at least 50% absorption (50% transmittance), at least 60% absorption (40% transmittance), or at least 75% absorption (25% transmittance), within the 700 nm to 3000 nm. The near infrared absorbent material may selectively absorb radiation in the 700 nm to 3000 nm wavelength region. The near-infrared wavelengths being considered herein broadly encompass any of the wavelengths within 700 nm to 3000 nm. In various embodiments, the near infrared absorbent material may absorb radiation at wavelengths in a range bounded by a minimum wavelength of, for example, 700 nm, 750 nm, 800 nm, 850 nm, 900 nm, 950 nm, 1000 nm, 1050 nm, 1100 nm, or 1150 nm, and a maximum wavelength of, for example, 1000 nm, 1050 nm, 1100 nm, 1150 nm, 1200 nm, 1250 nm, 1300 nm, 1350 nm, 1400 nm, 1450 nm, 1500 nm, 1550 nm, 1600 nm, 1700 nm, 1800 nm, 2000 nm, 2500 nm, and 3000 nm. The near infrared absorbent material absorption ranges may be governed by any combination of the foregoing minimum and maximum values herein. The foregoing exemplary absorption ranges can be achieved either by use of a single near infrared absorbent material, or alternatively, by use of more than one near infrared absorbent material (e.g., two, three, or four near infrared absorbent materials).

The near-infrared absorbent material according to the present invention has the following structure:

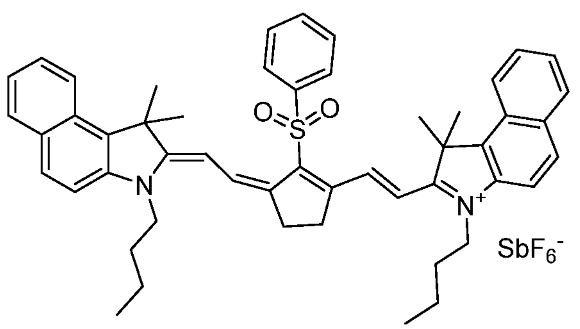

(I) .

The NIR absorbent materials described herein can be prepared by any of the procedures known in the art, e.g., as described in N. Narayan et al, J. Org. Chem., 1995, 60, 2391-2395. In some embodiments, the NIR absorbent materials are dispersed or dissolved into a surfactant.

Examples of suitable surfactants may include, but are not limited to, ethoxylated alcohols; sulfonated, sulfated and phosphated alkyl, aralkyl and alkaryl anionic surfactants; alkyl succinates; alkyl sulfosuccinates; and N-alkyl sarcosinates. Representative surfactants are the sodium, potassium, magnesium, ammonium, and the mono-, di- and triethanolamine salts of alkyl and aralkyl sulfates, as well as the salts of alkaryl sulfonates. The alkyl groups of the surfactants may have a total of from about twelve to twenty-one carbon atoms, may be unsaturated, and, in some embodiments, are fatty alkyl groups. The sulfates may be sulfate ethers containing one to fifty ethylene oxide or propylene

oxide units per molecule. In some embodiments, the sulfate ethers contain two to three ethylene oxide units. Other representative surfactants may include sodium lauryl sulfate, sodium lauryl ether sulfate, ammonium lauryl sulfate, triethanolamine lauryl sulfate, sodium $C_{14-16}$ olefin sulfonate, ammonium pareth-25 sulfate, sodium myristyl ether sulfate, ammonium lauryl ether sulfate, disodium monooleamidosulfosuccinate, ammonium lauryl sulfosuccinate, sodium dodecylbenzene sulfonate, sodium dioctyl sulfosucciniate, triethanolamine dodecylbenzene sulfonate, and sodium N-lauroyl sarcosinate.

Further examples of suitable surfactants may include the TERGITOL™ surfactants from The Dow Chemical Company, Midland, Mich.; SPAN™ 20, a nonionic surfactant, from Croda International, Snaith, East Riding of Yorkshire, UK., for Sorbitan Monolaurate; ARLATONE™ T, a nonionic surfactant, from Croda International, Snaith, East Riding of Yorkshire, UK., for polyoxyethylene 40 sorbitol septaoleate, i.e., PEG-40 Sorbitol Septaoleate; TWEEN™ 28, a nonionic surfactant, from Croda International, Snaith, East Riding of Yorkshire, UK., for polyoxyethylene 80 sorbitan laurate, i.e., PEG-80 Sorbitan Laurate; products sold under the tradenames or trademarks such as EMCOL™ and WITCONATE™ by AkzoNobel, Amsterdam, The Netherlands.; MARLON™ by Sasol, Hamburg Germany.; AEROSOL™ by Cytec Industries Inc, Woodland Park, N.J.; HAMPOSYL™ The Dow Chemical Company, Midland, Mich.;; and sulfates of ethoxylated alcohols sold under the tradename STANDAPOL™ by BASF.

In embodiments herein, the polyethylene-based polymer composition may comprise from 0.01 wt.% to 30 wt.% of the near-infrared absorbent material. All individual values and subranges are included and disclosed herein. For example, in some embodiments, the polyethylene-based polymer composition may comprise an amount of the near-infrared absorbent material of from 0.01 wt.% to 27.5 wt.%, from 0.01 wt.% to 25 wt.%, 0.01 wt.% to 22.5 wt.%, 0.01 wt.% to 20 wt.%, 0.01 wt.% to 17.5 wt.%, 0.01 wt.% to 15 wt.%, 0.01 wt.% to 12.5 wt.%, 0.01 wt.% to 10 wt.%, 0.01 wt.% to 7.5 wt.%, 0.01 wt.% to 5 wt.%, 0.01 wt.% to 4 wt.%, or 0.01 wt.% to 2.5 wt.%.

Optional Polymers

In embodiments herein, the polyethylene-based polymer composition may, optionally, comprise a medium density polyethylene (MDPE), a high density polyethylene (HDPE), or combinations thereof. In some embodiments, the polyethylene-based polymer composition may comprise from 5 to 100%, by weight of the polymer composition, of MDPE. All individual values and subranges from 5 to 100% are included and disclosed herein. For example, in some embodiments, the the polyethylene-based polymer composition may comprise from 25 to 100%, 30 to 100%, 35 to 90%, 40 to 85%, 40 to 80%, by weight of the polymer composition, of MDPE.

In other embodiments, the the polyethylene-based polymer composition may comprise from 1 to 30%, 1 to 20%, 1 to 15%, 1 to 10%, by weight of the polymer composition, of MDPE. In further embodiments, the the polyethylene-based polymer composition may comprise from 5 to 10%, by weight of the polymer composition, of MDPE.

In some embodiments, the polyethylene-based polymer composition may comprise from 5 to 100%, by weight of the polymer composition, of HDPE. All individual values and subranges from 5 to 100% are included and disclosed herein. For example, in some embodiments, the polyethylene-based polymer composition may comprise from 25 to 100%, 30 to 100%, 35 to 90%, 40 to 85%, 40 to 80%, by weight of the polymer composition, of HDPE. In other embodiments, the polyethylene-based polymer composition may comprise from 1 to 30%, 1 to 20%, 1 to 15%, 1 to 10%, by weight of the polymer composition, of HDPE. In further embodiments, the polyethylene-based polymer composition may comprise from 5 to 10%, by weight of the polymer composition, of HDPE.

In some embodiments, the polyethylene-based polymer composition may comprise no more than 50%, by weight of the polymer composition, of a medium density polyethylene (MDPE), a high density polyethylene (HDPE), or combinations thereof. In other embodiments, the polyethylene-based polymer composition may comprise no more than 40%, by weight of the polymer composition, of a medium density polyethylene (MDPE), a high density polyethylene (HDPE), or combinations thereof.

The MDPE may be an ethylene homopolymer or copolymers of ethylene and alpha-olefins. Suitable alpha-olefins may include those containing from 3 to 20 carbon atoms (C3-C20). For example, the alpha-olefin may be a C4-C20 alpha-olefin, a C4-C12 alpha-olefin, a C3-C10 alpha-olefin, a C3-C8 alpha-olefin, a C4-C8 alpha-olefin, or a C6-C8 alpha-olefin. In some embodiments, the MDPE is an ethylene/alpha-olefin copolymer, wherein the alpha-olefin is selected from the group consisting of propylene, 1-butene, 1-pentene, 1-hexene, 4-methyl-1-pentene, 1-heptene, 1-octene, 1-nonene and 1-decene. In other embodiments, the MDPE is an ethylene/alpha-olefin copolymer, wherein the alpha-olefin is selected from the group consisting of propylene, 1-butene, 1-hexene, and 1-octene.

The MDPE may have a density of from 0.923 g/cc and 0.935 g/cc. All individual values and subranges are included and disclosed herein. For example, in some embodiments, the MDPE may have a density of from 0.923 g/cc to 0.934 g/cc, 0.923 g/cc to 0.932 g/cc, or 0.923 g/cc to 0.930 g/cc. In other embodiments, the MDPE may have a density of from 0.925 g/cc to 0.935 g/cc, 0.928 g/cc to 0.935 g/cc, or 0.929 g/cc to 0.935 g/cc. The MDPE may have a melt index, or I2, of from 0.05 g/10 min to 5 g/10 min. All individual values and subranges are included and disclosed herein. For example, in some embodiments, the MDPE may have a melt index from 0.05 g/10 min to 2.5 g/10 min, 0.05 g/10

min to 2 g/10 min, 0.05 g/10 min to 1.5 g/10 min. In other embodiments, the MDPE has a melt index from 0.05 g/10 min to 1.1 g/10 min. In further embodiments, the MDPE has a melt index of 0.1-0.9 g/10 min.

In some embodiments, the MDPE may have a molecular weight distribution (MWD) of 2.0 to 8.0. All individual values and subranges are included and disclosed herein. For example, in some embodiments, the MDPE may have a MWD of 2.0 to 7.5, 2.0 to 7.0, 2.0 to 6.5, 2.0 to 6.0, 2.0 to 5.5, 2.0 to 5.0, 2.0 to 4.5, 2.0 to 4.0, 2.0 to 3.8, 2.0 to 3.6, 2.0 to 3.4, 2.0 to 3.2, or 2.0 to 3.0. In other embodiments, the MDPE may have a MWD of 2.2 to 4.0, 2.4 to 4.0, 2.6 to 4.0, 2.8 to 4.0, or 3.0 to 4.0. In further embodiments, the MDPE may have a MWD of 3.0 to 8.0, 3.5 to 8.0, 3.5 to 7.5, 3.5 to 7.0, 4.0 to 7.0, or 4.0 to 6.5.

The MDPE may be made by a gas-phase, solution-phase, or slurry polymerization processes, or any combination thereof, using any type of reactor or reactor configuration known in the art, e.g., fluidized bed gas phase reactors, loop reactors, stirred tank reactors, batch reactors in parallel, series, and/or any combinations thereof. In some embodiments, gas or slurry phase reactors are used. In some embodiments, the MDPE is made in the solution process operating in either parallel or series dual reactor mode. The MDPE may also be made by a high pressure, free-radical polymerization process. Methods for preparing MDPE by high pressure, free radical polymerization can be found in U.S. 2004/0054097, which is herein incorporated by reference, and can be carried out in an autoclave or tubular reactor as well as any combination thereof. The catalysts used to make the MDPE described herein may include Ziegler-Natta, metallocene, constrained geometry, single site catalysts, or chromium-based catalysts. Exemplary suitable MDPE resins may include resins sold by The Dow Chemical Company, such as, DOWLEX™ 2038.68G or DOWLEX™ 2042G, resins sold by LyondellBasell Industries (Houston, TX), such as, PETROTHENE™ L3035, ENABLE™ resins sold by The ExxonMobil Chemical Company (Houston, TX), resins sold by Chevron Phillips Chemical Company LP, such as, MARFLEX™ TR-130, and resins sold by Total Petrochemicals & Refining USA Inc., such as HF 513, HT 514, and HR 515. Other exemplary MDPE resins are described in U.S. 2014/0255674, which is herein incorporated by reference.

The HDPE may also be an ethylene homopolymer or copolymers of ethylene and alpha-olefins. Suitable alpha-olefins may include those containing from 3 to 20 carbon atoms (C3-C20). For example, the alpha-olefin may be a C4-C20 alpha-olefin, a C4-C12 alpha-olefin, a C3-C10 alpha-olefin, a C3-C8 alpha-olefin, a C4-C8 alpha-olefin, or a C6-C8 alpha-olefin. In some embodiments, the HDPE is an ethylene/alpha-olefin copolymer, wherein the alpha-olefin is selected from the group consisting of propylene, 1-butene, 1-pentene, 1-hexene, 4-methyl-1-pentene, 1-heptene, 1-octene, 1-nonene and 1-decene. In other embodiments, the HDPE is an ethylene/alpha-olefin copolymer, wherein the alpha-olefin is selected from the group consisting of propylene, 1-butene, 1-hexene, and 1-octene. The amount of comonomer used will depend upon the desired density of the HDPE polymer and the specific comonomers selected, taking into account processing conditions, such as temperature and pressure, and other factors such as the presence or absence of telomers and the like, as would be apparent to one of ordinary skill in the art in possession of the present disclosure.

The HDPE may have a density of from 0.935 g/cc and 0.975 g/cc. All individual values and subranges are included and disclosed herein. For example, in some embodiments, the HDPE may have a density of from 0.940 g/cc to 0.975 g/cc, 0.940 g/cc to 0.970 g/cc, or 0.940 g/cc to 0.965 g/cc. In other embodiments, the HDPE may have a density of from 0.945 g/cc to 0.975 g/cc, 0.945 g/cc to 0.970 g/cc, or 0.945 g/cc to 0.965 g/cc. In further embodiments, the HDPE may have a density of from 0.947 g/cc to 0.975 g/cc, 0.947 g/cc to 0.970 g/cc, 0.947 g/cc to 0.965 g/cc, 0.947 g/cc to 0.962 g/cc, or 0.950 g/cc to 0.962 g/cc. The HDPE may have a melt index, or 12, of from 0.01 g/10 min to 100 g/10 min. All individual values and subranges are included and disclosed herein. For example, in some embodiments, the HDPE may have a melt index from 0.01 g/10 min to 5 g/10 min, 0.01 g/10 min to 4 g/10 min, 0.01 g/10 min to 3.5 g/10 min, 0.01 g/10 min to 3 g/10 min, 0.01 g/10 min to 2.5 g/10 min, 0.01 g/10 min to 2 g/10 min, 0.01 g/10 min to 1.5 g/10 min, 0.01 g/10 min to 1.25 g/10 min, or 0.01 g/10 min to 1 g/10 min. In other embodiments, the HDPE has a melt index from 0.05 g/10 min to 5 g/10 min, 0.1 g/10 min to 5 g/10 min, 1.0 g/10 min to 10 g/10 min, 1.0 g/10 min to 8 g/10 min, 1.0 g/10 min to 7 g/10 min, or 1.0 g/10 min to 5 g/10 min. In further embodiments, the HDPE has a melt index of 0.3-1.0 g/10 min.

The HDPE may be made by a gas-phase, solution-phase, or slurry polymerization processes, or any combination thereof, using any type of reactor or reactor configuration known in the art, e.g., fluidized bed gas phase reactors, loop reactors, stirred tank reactors, batch reactors in parallel, series, and/or any combinations thereof. In some embodiments, gas or slurry phase reactors are used. In some embodiments, the HDPE is made in the solution process operating in either parallel or series dual reactor mode. The catalysts used to make the HDPE described herein may include Ziegler-Natta, metallocene, constrained geometry, single site catalysts, or chromium-based catalysts. The HDPE can be unimodal, bimodal, and multimodal. Exemplary HDPE resins that are commercially available include, for instance, ELITE™ 5940G, ELITE™ 5960G, HDPE 35454L, HDPE 82054, HDPE DGDA-2484 NT, DGDA-2485 NT, DGDA-5004 NT, DGDB-2480 NT resins available from The Dow Chemical Company (Midland, MI), L5885 and M6020 HDPE resins from Equistar Chemicals, LP, ALATHON™ L5005 from LyondellBasell Industries (Houston, TX), and MARFLEX™ HDPE HHM TR-130 from Chevron Phillips Chemical Company LP. Other exemplary HDPE resins are described in U.S. 7,812,094, which is herein incorporated by reference.

Additives

The polyethylene-based polymer compositions may further comprise additional components such as one or more other polymers and/or one or more additives. Such additives include, but are not limited to, antistatic agents, color enhancers, dyes, lubricants, fillers, pigments, primary antioxidants, secondary antioxidants, processing aids, UV stabilizers, anti-blocks, slip agents, tackifiers, fire retardants, anti-microbial agents, odor reducer agents, anti-fungal agents, and combinations thereof. The polyethylene-based polymer composition may contain from about 0.01 to about 10 percent by the combined weight of such additives, based on the total weight of the polyethylene-based polymer composition.

Films

The polyethylene-based polymer compositions described herein may be incorporated into monolayer films or multilayer films. The monolayer shrink films and multilayer shrink films described herein are ethylene-based or polyethylene-based. In some embodiments, a monolayer film comprising the polyethylene-based polymer compositions described herein is disclosed. In other embodiments, a multilayer film comprising at least one layer that comprises the polyethylene-based polymer compositions described herein is disclosed. The monolayer or multilayer film may be prepared by providing a polyethylene-based polymer composition as previously described herein, and forming a monolayer film or a multilayer film having at least one layer comprising the polyethylene-based polymer composition.

The polyethylene-based polymer compositions may comprise at least 40 wt.% of the monolayer or of the at least one layer of the multilayer film. All individual values and subranges are included and disclosed herein. For example, in some embodiments, the polyethylene-based polymer compositions may comprise at least 50 wt.%, at least 60 wt.%, at least 70 wt.%, at least 75 wt.%, at least 80 wt.%, at least 85 wt.%, at least 90 wt.%, at least 95 wt.%, at least 99 wt.%, at least 100 wt.% of the monolayer or at least one layer of the multilayer film.

In some embodiments, the polyethylene-based polymer compositions disclosed herein may be blended or mixed with one or more other polyolefins. Suitable polymers for blending with the polyethylene-based polymer compositions may include thermoplastic and non-thermoplastic polymers, including natural and synthetic polymers. Exemplary polymers for blending may include polypropylene, (both impact modifying polypropylene, isotactic polypropylene, atactic polypropylene, and random ethylene/propylene copolymers), various types of polyethylene, including other high pressure, free-radical low density polyethylenes (LDPEs), other Ziegler-Natta linear low density polyethylenes (LLDPEs), metallocene PEs, including multiple reactor PEs ("in reactor" blends of Ziegler-Natta PE and metallocene PE, such as products disclosed in U.S. Patent Nos. 6,545,088 (Kolthammer, et al.); 6,538,070 (Cardwell, et al.); 6,566,446 (Parikh, et al.); 5,844,045 (Kolthammer, et al.); 5,869,575 (Kolthammer, et al.); and 6,448,341 (Kolthammer, et al.)), ethylene-vinyl acetate (EVA), ethylene/vinyl alcohol copolymers, polystyrene, impact modified polystyrene, acrylonitrile-butadiene-styrene (ABS), styrene/butadiene block copolymers and hydrogenated derivatives thereof, such as, for example, styrene-butadiene-styrene (SBS) and styrene-ethylene-butadiene-styrene (SEBS), and thermoplastic polyurethanes. Homogeneous polymers, such as, olefin plastomers and elastomers, ethylene and propylene-based copolymers (for example, polymers available under the trade designation VERSIFY™ Plastomers & Elastomers (The Dow Chemical Company), SURPASS™ (Nova Chemicals), and VISTAMAXX™ (ExxonMobil Chemical Co.)) can also be useful as components in blends comprising the polyethylene-based polymer compositions.

In embodiments herein, the monolayer or multilayer film comprises from 0.01 wt.% to 30 wt.% of the near-infrared absorbent material. All individual values and subranges are included and disclosed herein. For example, in some embodiments, the polyethylene-based polymer composition may comprise an amount of the near-infrared absorbent material of from 0.01 wt.% to 27.5 wt.%, from 0.01 wt.% to 25 wt.%, 0.01 wt.% to 22.5 wt.%, 0.01 wt.% to 20 wt.%, 0.01 wt.% to 17.5 wt.%, 0.01 wt.% to 15 wt.%, 0.01 wt.% to 12.5 wt.%, 0.01 wt.% to 10 wt.%, 0.01 wt.% to 7.5 wt.%, 0.01 wt.% to 5 wt.%, 0.01 wt.% to 4 wt.%, or 0.01 wt.% to 2.5 wt.%.

In embodiments herein, the multilayer shrink films described herein may further comprise one or more intermediate layers positioned between a core layer and at least one outer layer. In some embodiments, the multilayer shrink films may comprise one or more intermediate layers positioned between a core layer and a first outer layer. In other embodiments, the multilayer shrink films may comprise one or more intermediate layers positioned between a core layer and a second outer layer. In further embodiments, the multilayer shrink films may comprise one or more intermediate layers positioned between a core layer and a first outer layer, and between a core layer and a second outer layer. The one or more intermediate layers may comprise LDPE, LLDPE, MDPE, HDPE, or blends thereof. Suitable LDPE, LLDPE, MDPE, HDPE resins are previously described herein. In some embodiments, the one or more intermediate layers may also comprise near infrared absorbent material. The one or more intermediate layers may comprise stiffening layers, additional shrink layers, or additional layers which are neither shrink nor stiffening layers. Such additional layers may, for example, impart different functionality such as barrier layers, or tie layers, as is generally known in the art

Also disclosed herein is a multilayer film that comprises a core layer and at least one outer layer, wherein the core layer comprises a low density polyethylene having a density of from 0.917 g/cc to 0.935 g/cc and melt index, $I_2$, of

from 0.1 g/10 min to 5 g/10 min, and optionally, a linear low density polyethylene, a medium density polyethylene, a high density polyethylene, or combinations thereof, and wherein the at least one outer layer comprises a near-infrared absorbent material. In some embodiments, the multilayer film comprises a core layer positioned between two outer layers. The two outer layers may be the same or different, and may have an ABA film structure, where the A skin layers may have the same or different thickness, but are symmetrical in composition, or an ABC film structure, where the A and C may have the same or different thickness, but the skin layers are unsymmetrical in composition.

While the at least one outer layer comprises a NIR absorbent material, in some embodiments, the core layer further comprises a NIR absorbent material. That is, the near-infrared absorbent material is present in at least one outer layer and the core layer. In other embodiments, the near-infrared absorbent material is present in at least one outer layer or the core layer. In further embodiments, where the multilayer film comprises a core layer positioned between two outer layers, the NIR absorbent material may be present in the two outer layers. In even further embodiments, where the multilayer film comprises a core layer positioned between two outer layers, the NIR absorbent material may be present in the two outer layers and the core layer. The near-infrared absorbing material present in the film absorbs radiation at wavelengths of from 700 nm to 3000 nm as previously described above. Suitable near-infrared absorbent materials are also previously described herein. In some embodiments, the NIR absorbent material comprises cyanine-based dyes.

The thickness ratio of the at least one outer layer to the core layer can be any ratio suitable to maintain the optical and mechanical properties of a shrink film. In some embodiments, the thickness ratio of the at least one outer layer to the core layer may be 1:5 to 1:1, 1:4 to 1:1, 1:3 to 1:1, 1:2 to 1:1, or 1:1.5 to 1:1. The thickness ratio of the at least one outer layer to the core layer can also be captured by percentages. For example, in some embodiments, the core layer comprises from about 50 wt.% to about 95 wt.% of the overall film thickness. In other embodiments, the core layer comprises from about 60 wt.% to about 90 wt.% of the overall film thickness. In further embodiments, the core layer comprises from about 65 wt.% to about 85 wt.% of the overall film thickness.

In further embodiments, where the multilayer film comprises a core layer positioned between two outer layers, the thickness ratio of the two outer layers to the core layer can be any ratio suitable to maintain the optical and mechanical properties of a shrink film. In some embodiments, the thickness ratio of the two outer layers to the core layer may be 1:10 to 1:1, 1:5 to 1:1, 1:4 to 1:1, 1:2 to 1:1, or 1:1.5 to 1:1. The thickness ratio of the two outer layers to the core layer can also be captured by percentages. For example, in some embodiments, the core layer comprises from about 50 wt.% to about 95 wt.% of the overall film thickness. In other embodiments, the core layer comprises from about 60 wt.% to about 90 wt.% of the overall film thickness. In further embodiments, the core layer comprises from about 65 wt.% to about 85 wt.% of the overall film thickness. The two outer layers may have an equal thickness, or alternatively, may have an unequal thickness. The monolayer or multilayer films described herein may have a total film thickness of 100 microns or less. All individual values and subranges are included and disclosed herein. For example, in some embodiments, the monolayer or multilayer films described herein may have a total film thickness of 75 microns or less, 50 microns or less, 45 microns or less, 40 microns or less, or 35 microns or less. While there is no minimum thickness contemplated for the monolayer or multilayer films of the present invention, practical considerations of current manufacturing equipment suggests that the minimum thickness will be at least 8 microns.

In some embodiments, the core layer may comprise from 5 to 100 wt.% of the low density polyethylene. All individual values and subranges, as described above for LDPEs, are included and disclosed herein. For example, the core layer may comprise from 5 to 95 wt.%, from 15 to 95 wt.%, from 25 to 95 wt.%, from 35 to 95 wt.%, from 45 to 95 wt.%, from 55 to 95 wt.%, from 65 to 95 wt.%, from 75 to 95 wt.%, or from 80 to 95 wt.%, of the low density polyethylene. In other examples, the core layer may comprise from 5 to 45 wt.%, from 5 to 40 wt.%, from 5 to 35 wt.%, from 5 to 30 wt.%, from 5 to 25 wt.%, or from 5 to 20 wt.%, of the low density polyethylene.

In other embodiments, the core layer comprises from 5 to 100 wt.% of the linear low density polyethylene having a density of from 0.900 g/cc to 0.965 g/cc and melt index, $I_2$, of from 0.1 g/10 min to 5 g/10 min. All individual values and subranges, as described above for LLDPE, are included and disclosed herein. For example, the core layer may comprise from 5 to 95 wt.%, from 15 to 95 wt.%, from 25 to 95 wt.%, from 35 to 95 wt.%, from 45 to 95 wt.%, from 55 to 95 wt.%, from 65 to 95 wt.%, from 75 to 95 wt.%, or from 80 to 95 wt.%, of the linear low density polyethylene. In other examples, the core layer may comprise from 5 to 45 wt.%, from 5 to 40 wt.%, from 5 to 35 wt.%, from 5 to 30 wt.%, from 5 to 25 wt.%, or from 5 to 20 wt.%, of the linear low density polyethylene.

In further embodiments, the core layer comprises 5 to 100 wt.% of the low density polyethylene and from at least 5 wt.% of the linear low density polyethylene having a density of from 0.900 g/cc to 0.965 g/cc and melt index, $I_2$, of from 0.1 g/10 min to 5 g/10 min. All individual values and subranges are included and disclosed herein. For example, the core layer may comprise 5 to 50 wt.%, 5 to 45 wt.%, 10 to 45 wt.%, 15 to 45 wt.%, 20 to 45 wt.%, or 25 to 45 wt.% of the low density polyethylene, and from 50 to 95 wt.%, 55 to 95 wt.%, 55 to 90 wt.%, 55 to 85 wt.%, 55 to 80 wt.%, or 55 to 75 wt.% of the linear low density polyethylene. In other examples, the core layer may comprise 50 to 95 wt.%, 55 to 95 wt.%, 60 to 95 wt.%, 65 to 95 wt.%, 70 to 95 wt.%, or 70 to 90 wt.% of the low density polyethylene and from 5 to 50 wt.%, 5 to 45 wt.%, 5 to 40 wt.%, 5 to 35 wt.%, 5 to 30 wt.%, or 10 to 30 wt.% of the linear low density polyethylene.

The at least one outer layer may independently comprise a LDPE, LLDPE, MDPE, HDPE, or combinations thereof. Suitable LDPE, LLDPE, MDPE, HDPE, or combinations thereof are previously disclosed herein. In some embodiments, the at least one outer layer comprises LLDPE. In other embodiments, the at least one outer layer comprises LDPE and LLDPE. In further embodiments, the at least one outer layer comprises from 50 to 100%, by weight, of a LLDPE.

The monolayer films and/or the multilayer films described herein may be oriented. In some embodiments, the monolayer films and/or the multilayer films may be uniaxially-oriented. Uniaxial stretching can be performed using a conventional tenter or in a length orienter, such as length orientation between rollers rotating at different speeds. A general discussion of film processing techniques can be found in "Film Processing," Chs. 1, 2, 3, 6 & 7, edited by Toshitaka Kanai and Gregory Campbell, 2013. *See also* WO 2002/096622, which discloses stretching in a parabolic-path tenter.

In other embodiments, the monolayer films and/or the multilayer films may be biaxially-oriented. In some embodiments, the monolayer films and multilayer films may be biaxially-oriented below its highest melting point. The highest melting point for the films herein may be determined by using the melting peak with the highest temperature as determined by DSC. The films may be biaxially oriented using methods, such as, tenter framing, double bubble, trapped bubble, tape orientation or combinations thereof. In some embodiments, the films may be biaxially oriented using a double bubble or tenter framing process. The films described herein are thought to be generally applicable to operations where the fabrication and orientation steps are separable as well as to operations where fabrication and orientation occur simultaneously or sequentially as part of the operation itself (e.g., a double bubble technique or tenter framing).

The monolayer films and/or the multilayer films described herein may be cross-linked. In some embodiments, electron beam can be used to cross-link. In other embodiment, the films may be formulated with a cross-linking agent, such as, pro-rad agents, including triallyl cyanurate as described by Warren in U.S. Pat. No. 4,957,790, and/or with antioxidant crosslink inhibitors, such as butylated hydroxytoluene as described by Evert et al. in U.S. Pat. No. 5,055,328.

The monolayer films and/or one or more layers of the multilayer films may further comprise additional components, such as, one or more other polymers and/or one or more additives. Example polymer additives have been described in Zweifel Hans et al., "Plastics Additives Handbook," Hanser Gardner Publications, Cincinnati, Ohio, 5th edition (2001), which is incorporated herein by reference in its entirety. Such additives include, but are not limited to, antistatic agents, color enhancers, dyes, lubricants, fillers, pigments, primary antioxidants, secondary antioxidants, processing aids, UV stabilizers, anti-blocks, slip agents, tackifiers, fire retardants, anti-microbial agents, odor reducer agents, anti-fungal agents, and combinations thereof. The total amount of the additives present in monolayer films and/or multilayer films may range from about 0.1 combined wt.% to about 10 combined wt.%, by weight of a layer.

The monolayer films and/or multilayer films described herein may be manufactured by coextruding a primary tube, and orienting the primary tube to form a film. In some embodiments, the process comprises coextruding a multilayer primary tube, and orienting the multilayer primary tube to form a multilayer film. In other embodiments, the process comprises extruding a monolayer primary tube, and orienting the monolayer primary tube to form a monolayer film. Production of a monolayer shrink film is described in U.S. Patent Publication No. 2011/0003940, the disclosure of which is incorporated in its entirety herein by reference. Film manufacturing processes are also described in U.S. Pat. Nos. 3,456,044 (Pahlke), U.S. Pat. No. 4,352,849 (Mueller), U.S. Pat. Nos. 4,820,557 and 4,837,084 (both to Warren), U.S. Pat. No. 4,865,902 (Golike et al.), U.S. Pat. No. 4,927,708 (Herran et al.), U.S. Pat. No. 4,952,451 (Mueller), and U.S. Pat. Nos. 4,963,419, and 5,059,481 (both to Lustig et al.), the disclosures of which are incorporated herein by reference.

In some embodiments, a method of making a shrink film comprises providing a polyethylene-based polymer composition comprising (i) a low density polyethylene having a density of from 0.917 g/cc to 0.935 g/cc and melt index, $I_2$, of from 0.1 g/10 min to 5 g/10 min, a linear low density polyethylene having a density of from 0.900 g/cc to 0.965 g/cc and melt index, $I_2$, of from 0.05 g/10 min to 15 g/10 min, or combinations thereof, (ii) a near-infrared absorbent material, and (iii) optionally, a medium density polyethylene, a high density polyethylene, or combinations thereof, forming a monolayer film or a multilayer film having at least one layer comprising the polyethylene-based polymer composition

In other embodiments, a method of making a multilayer shrink film comprises coextruding a film comprising a core layer and at least one outer layer, wherein the core layer comprises a low density polyethylene having a density of from 0.917 g/cc to 0.935 g/cc and melt index, $I_2$, of from 0.1 g/10 min to 5 g/10 min, and optionally, a linear low density polyethylene, a medium density polyethylene, a high density polyethylene, or combinations thereof, and wherein the at least one outer layer comprises a near-infrared absorbent material.

In further embodiments, a method of making a multilayer shrink film comprises coextruding a film comprising a core layer positioned between a first outer layer and a second outer layer, wherein the core layer comprises a low density polyethylene having a density of from 0.917 g/cc to 0.935 g/cc and melt index, $I_2$, of from 0.1 g/10 min to 5 g/10 min, and optionally, a linear low density polyethylene, a medium density polyethylene, a high density polyethylene, or combinations thereof, and wherein the first outer layer comprises a near-infrared absorbent material.

The monolayer shrink films and/or multilayer shrink films described herein may exhibit at least one characteristic selected from the group consisting of 45 degree gloss, total haze, 1% cross direction (CD) secant modulus, 1% machine direction (MD) secant modulus, CD shrink tension, MD shrink tension, puncture resistance, dart drop impact strength,

CD shrinkage %, and/or MD shrinkage %, having individual values or ranges as described below. That is, any combination of characteristics may be exhibited by the monolayer films and/or multilayer films described herein. For example, in some embodiments, the monolayer films and/or multilayer films described herein may exhibit a 45 degree gloss of at least 50%. All individual values and subranges are included and disclosed herein. For example, the monolayer films and/or multilayer films described herein may have a 45 degree gloss of at least 55%, 60%, 65%, or 70%.

In some embodiments, the monolayer films and/or multilayer films described herein may have a total haze value of less than 15%. All individual values and subranges are included and disclosed herein. For example, the monolayer films and/or multilayer films described herein may have a total haze value of less than 14%, 12%, or 10%. The monolayer films and/or multilayer films described herein may also have a total haze value of 5% to 15%, 5% to 14%, 5% to 12%, or 5% to 10%.

In some embodiments, the monolayer films and/or multilayer films described herein may have a 1% CD Secant Modulus of 43,000 psi or greater. All individual values and subranges are included and disclosed herein. For example, the monolayer films and/or multilayer films described herein may have a 1% CD Secant Modulus of 44,000 psi or greater, 45,000 psi or greater, 50,000 psi or greater, or 55,000 psi or greater. In some embodiments, the monolayer films and/or multilayer films described herein may have a 1% MD Secant Modulus of 38,000 psi or greater. All individual values and subranges are included and disclosed herein. For example, the monolayer films and/or multilayer films described herein may have a 1% MD Secant Modulus of 40,000 psi or greater, 45,000 psi or greater, 48,000 psi or greater, 50,000 psi or greater, or 55,000 psi or greater.

In some embodiments, the monolayer films and/or multilayer films described herein may have a CD shrink tension of at least 0.7 psi. All individual values and subranges are included and disclosed herein. For example, the monolayer films and/or multilayer films described herein may have a CD shrink tension of at least 0.8 psi, 0.9 psi, or 1.0 psi. In some embodiments, the monolayer films and/or multilayer films described herein may have a MD shrink tension of at least 10 psi. All individual values and subranges are included and disclosed herein. For example, the monolayer films and/or multilayer films described herein may have a MD shrink tension of at least 12 psi, 15 psi, 18 psi, or 20 psi.

In some embodiments, the monolayer films and/or multilayer films described herein may have a puncture resistance of at least 2.0 J/cm$^3$. All individual values and subranges are included and disclosed herein. For example, the monolayer films and/or multilayer films described herein may have a puncture resistance of at least 2.2 J/cm$^3$, at least 2.4 J/cm$^3$, at least 2.6 J/cm$^3$, at least 2.8 J/cm$^3$, at least 3.0 J/cm$^3$, at least 3.5 J/cm$^3$, or at least 4.0 J/cm$^3$.

In some embodiments, the monolayer films and/or multilayer films described herein may have a dart drop impact strength of at least 300 g. All individual values and subranges are included and disclosed herein. For example, the monolayer films and/or multilayer films described herein may have a dart drop impact strength of at least 350 g, at least 400 g, at least 450 g, at least 500 g, or at least 525 g.

In some embodiments, the monolayer films and/or multilayer films described herein may have a CD shrinkage % from 0% to 25%. All individual values and subranges are included and disclosed herein. For example, the monolayer films and/or multilayer films described herein may have a CD shrinkage % from 1% to 25%, from 3% to 25%, from 1% to 20%, from 3% to 20%, from 5% to 20%, from 5% to 18%, or from 5% to 15%. In some embodiments, the monolayer films and/or multilayer films described herein may have a MD shrinkage % of from 25% to 90%. All individual values and subranges are included and disclosed herein. For example, in some embodiments, the monolayer films and/or multilayer films described herein may have a MD shrinkage % of from 25% to 85%, from 25% to 80%, 25% to 75%, 25% to 70% or 25% to 65%. In other embodiments, the monolayer films and/or multilayer films described herein may have a MD shrinkage % of from 40% to 90%, from 40% to 85%, from 40% to 80%, from 40% to 75%, from 40% to 70%, from 50% to 90%, from 50% to 80%, from 50% to 75%, or from 50% to 70%.

The monolayer films and/or multilayer films described herein may be used for any purpose generally known in the art. Such uses may include, but are not limited to, clarity shrink films, collation shrink films, shrink hood films, heavy duty shipping sacks, block bottom bag and stand-up pouch films, liner films, machine direction oriented films, silobags, and diaper compression packaging bags. Different methods may be employed to manufacture such films. Suitable conversion techniques include, but are not limited to, blown film extrusion process, cast film extrusion process, vertical or horizontal form fill and seal process. Such techniques are generally well known. In some embodiments, the films may be manufactured using a blown film extrusion process. Blown film extrusion processes are essentially the same as regular extrusion processes up until the die. The die in a blown film extrusion process is generally an upright cylinder with a circular opening similar to a pipe die. The diameter can be a few centimeters to more than three meters across. The molten plastic is pulled upwards from the die by a pair of nip rolls above the die (from 4 meters to 20 meters or more above the die depending on the amount of cooling required). Changing the speed of these nip rollers will change the gauge (wall thickness) of the film. Around the die sits an air-ring. The air-ring cools the film as it travels upwards. In the center of the die is an air outlet from which compressed air can be forced into the center of the extruded circular profile, creating a bubble. This expands the extruded circular cross section by some ratio (a multiple of the die diameter). This ratio, called the "blow-up ratio" or "BUR" can be just a few percent to more than 200 percent of the original diameter. The nip rolls flatten the bubble into a double layer of film whose width (called the "layflat") is equal to ½ the circumference

of the bubble. This film can then be spooled or printed on, cut into shapes, and heat sealed into bags or other items. In some instances a blown film line capable of producing a greater than desired number of layers may be used. For example, a five layer line may be used to produce a 3 layered shrink film. In such cases, one or more of the shrink film layers comprises two or more sub-layers, each sub-layer having an identical composition.

In some embodiments, the monolayer films and/or multilayer films described herein may be used as collation shrink films. The collation shrink films may be used to wrap household, food, healthcare or beverage products, in particular products that are packaged in containers such as bottles, cans, tubs and the like. Wherever a product is shipped in numerous essentially identical containers, the use of collation shrink film is useful to prevent damage to the products and keep the product secure during transport. A common application is in the beverage transportation market. It will be appreciated that collation shrink films might also be used to wrap industrial products such as chemicals and the like.

To wrap household, food, healthcare or beverage products, the monolayer and/or multilayer films may be wrapped around groups of articles, e.g., water bottles, and then shrinking wrap around the articles to form a package. See, for e.g., U.S. Pat. No. 3,545, 165. To shrink the wrap around the articles, the articles may be fed into a heat tunnel where a laser beam may be used to heat shrink the films, with the wavelength of the laser beam adjusted to match the absorption spectrum of the film. For example, a suitable heat tunnel and shrink wrap film process is discussed in copending U.S. Application Ser. No. 62/085,781, Docket No. 25059.112.000, titled "Laser Heat Film Processing". The closed ends of the packages (known as "bulls eyes") are at ends of the packages in the direction of travel. In the packaging industry, aesthetics has become an increasingly important issue, both for the package that is produced and the machine that produces it. When the film is shrunk around the end of a package, it should leave a circular opening, the "bulls eye", and should be free of wrinkles.

In other embodiments, the monolayer films and/or multilayer films described herein may be used as shrink hood films. The shrink hood films may be used on palletized loads prior to transport. The film is typically preformed and is placed loosely over the load. The film is then heated by an array of laser beams that translate up and down the load. Upon heating, the film shrinks and tightly conforms to the palletized load. The use of laser beams, in conjunction with the films described herein, can reduce the energy used to shrink the films. In this case, the film is exposed to the laser light only long enough to generate enough heat to shrink the film. This technology allows for more compact packaging lines that may use less energy than a gas or electrically heated shrink equipment. Of course, these are mere examples of applications for the monolayer films and/or multilayer films described herein.

## Test Methods

Unless otherwise stated, the following test methods are used. All test methods are current as of the filing date of this disclosure.

### Density

Density is measured according to ASTM D792, Method B.

### Melt Index

Melt index, or $I_2$, is measured according to ASTM D1238 at 190°C, 2.16 kg. Melt index, or $I_{10}$, is measured in accordance with ASTM D1238 at 190°C, 10 kg. Melt index, or $I_{21}$, is measured in accordance with ASTM D1238 at 190°C, 21.6 kg.

### Total (Overall) Haze

Total haze is measured according to ASTM D1003-07. A Hazegard Plus (BYK-Gardner USA; Columbia, Md.) is used for testing. For each test, five samples are examined, and an average reported. The sample dimensions are "6 in×6 in."

### 45° Gloss

45° Gloss is measured according to ASTM D2457-08. Five samples are examined, and an average reported. The sample dimensions are about "10 in×10 in".

### Dart Drop Impact Strength

Dart Drop Impact Strength is measured according to ASTM-D 1709-04, Method A.

1% Secant Modulus, Tensile Break Strength, & Tensile Break Elongation %

1% secant modulus, tensile break strength, and tensile break elongation % is measured in the machine direction (MD) and cross direction (CD) with an Instron universal tester according to ASTM D882-10. The 1% secant modulus, tensile break strength, and tensile break elongation % is determined using five film samples in each direction, with each sample being "1 in×6 in" in size.

Elemendorf Tear Strength

Elemendorf tear strength is measured according to ASTM D-1922, Method B.

Puncture Resistance

Puncture resistance is measured on an Instron Model 4201 with Sintech Testworks Software Version 3.10. The specimen size is 6"×6" and 4 measurements are made to determine an average puncture value. The film is conditioned for 40 hours after film production and at least 24 hours in an ASTM controlled laboratory (23°C and 50% relative humidity). A 100 lb load cell is used with a round specimen holder. The specimen is a 4 inch diameter circular specimen. The puncture probe is a ½ inch diameter polished stainless steel ball (on a 2.5 inch rod) with a 7.5 inch maximum travel length. There is no gauge length; the probe is as close as possible to, but not touching, the specimen. The probe is set by raising the probe until it touched the specimen. Then the probe is gradually lowered, until it is not touching the specimen. Then the crosshead is set at zero. Considering the maximum travel distance, the distance would be approximately 0.10 inch. The crosshead speed used is 10 inches/minute. The thickness is measured in the middle of the specimen. The thickness of the film, the distance the crosshead traveled, and the peak load are used to determine the puncture by the software. The puncture probe is cleaned using a "Kim-wipe" after each specimen.

Shrink Tension

Shrink tension is measured according to the method described in Y. Jin, T. Hermel-Davidock, T. Karjala, M. Demirors, J. Wang, E. Leyva, and D. Allen, "Shrink Force Measurement of Low Shrink Force Films", SPE ANTEC Proceedings, p. 1264 (2008). The shrink tension of film samples are measured through a temperature ramp test and conducted on an RSA-III Dynamic Mechanical Analyzer (TA Instruments; New Castle, Del.) with a film fixture. The film specimens are "12.7 mm wide" and "63.5 mm long," and are die cut from the film sample, either in the machine direction (MD) or the cross direction (CD), for testing. The film thickness is measured by a Mitutoyo Absolute digimatic indicator (Model C112CEXB). This indicator has a maximum measurement range of 12.7 mm, with a resolution of 0.001 mm. The average of three thickness measurements, at different locations on each film specimen, and the width of the specimen, are used to calculate the film’s cross sectional area (A), in which "A=WidthxThickness" of the film specimen used in shrink film testing. A standard film tension fixture from TA Instruments is used for the measurement. The oven of the RSA-III is equilibrated at 25°C for at least 30 minutes, prior to zeroing the gap and the axial force. The initial gap is set to 20 mm. The film specimen are then attached onto both the upper and the lower fixtures. Typically, measurements for MD only require one ply film. Because the shrink tension in the CD direction is typically low, two or four plies of films are stacked together for each measurement to improve the signal-to-noise ratio. In such a case, the film thickness is the sum of all of the plies. In this work, a single ply is used in the MD direction and two plies are used in the CD direction. After the film reaches the initial temperature of 25°C, the upper fixture is manually raised or lowered slightly to obtain an axial force of -1.0 g. This is to ensure that no buckling or excessive stretching of the film occurs at the beginning of the test. Then the test is started. A constant fixture gap is maintained during the entire measurement. The temperature ramp starts at a rate of 90°C/min, from 25°C to 80°C, followed by a rate of 20°C/min from 80°C to 160°C. During the ramp from 80°C to 160°C, as the film shrunk, the shrink force, measured by the force transducer, is recorded as a function of temperature for further analysis. The difference between the "peak force" and the "baseline value before the onset of the shrink force peak" is considered the shrink force (F) of the film. The shrink tension of the film is the ratio of the shrink force (F) to the cross sectional area (A) of the film.

CD & MD % Shrinkage

A 4"×4" specimen of a film sample is placed in a film holder then immersed in a hot oil bath for 30 seconds at the desired temperature. The oil used is Dow Corning 210H. After 30 seconds, the film holder/sample is removed, allowed to cool, and then the specimen is measured in both the machine and cross directions. The % shrinkage in either the MD or CD is calculated from the measurement of the initial length of the sample, Lo, vs. the newly measured length after being in the hot oil bath per the above procedure, Lf.

$$\% \, Shrinkage = \frac{(Lf - Lo)}{Lo} \, x \, 100\%$$

Melt Strength

Melt strength is measured at 190°C. using a Goettfert Rheotens 71.97 (Goettfert Inc.; Rock Hill, S.C.), melt fed with a Goettfert Rheotester 2000 capillary rheometer equipped with a flat entrance angle (180 degrees) of length of 30 mm and diameter of 2 mm. The pellets are fed into the barrel (L=300 mm, Diameter=12 mm), compressed and allowed to melt for 10 minutes before being extruded at a constant piston speed of 0.265 mm/s, which corresponds to a wall shear rate of $38.2s^{-1}$ at the given die diameter. The extrudate passes through the wheels of the Rheotens located at 100 mm below the die exit and is pulled by the wheels downward at an acceleration rate of 2.4 $mm/s^2$. The force (in cN) exerted on the wheels is recorded as a function of the velocity of the wheels (mm/s). Melt strength is reported as the plateau force (cN) before the strand breaks.

Triple Detector Gel Permeation Chromatography (TDGPC)

High temperature TDGPC analysis is performed on an ALLIANCE GPCV2000 instrument (Waters Corp.) set at 145°C. The flow rate for the GPC is 1 mL/min. The injection volume is 218.5 μL. The column set consists of four, Mixed-A columns (20-μm particles; 7.5×300 mm; Polymer Laboratories Ltd).

Detection is achieved by using an IR4 detector from PolymerChAR, equipped with a CH-sensor; a Wyatt Technology Dawn DSP Multi-Angle Light Scattering (MALS) detector (Wyatt Technology Corp., Santa Barbara, Calif., USA), equipped with a 30-mW argon-ion laser operating at λ=488 nm; and a Waters three-capillary viscosity detector. The MALS detector is calibrated by measuring the scattering intensity of the TCB solvent. Normalization of the photodiodes is done by injecting SRM 1483, a high density polyethylene with weight-average molecular weight (Mw) of 32,100 g/mol and polydispersity (molecular weight distribution, Mw/Mn) of 1.11. A specific refractive index increment (*d*n/*d*c) of -0.104 mL/mg, for polyethylene in 1,2,4-trichlorobenzene (TCB), is used.

The conventional GPC calibration is done with 20 narrow MWD, polystyrene (PS) standards (Polymer Laboratories Ltd.) with molecular weights in the range 580-7,500,000 g/mol. The polystyrene standard peak molecular weights are converted to polyethylene molecular weights using the following equation:

$$M_{polyethylene} = A \text{ x } (M_{polystyrene})^B ,$$

with A=0.39 and B=1. The value of A is determined by using a linear high density polyethylene homopolymer (HDPE) with Mw of 115,000 g/mol. The HDPE reference material is also used to calibrate the IR detector and viscometer by assuming 100% mass recovery and an intrinsic viscosity of 1.873 dL/g.

Distilled "Baker Analyzed" grade 1,2,4-trichlorobenzene (J. T. Baker, Deventer, The Netherlands), containing 200 ppm of 2,6-di-tert-butyl-4-methylphenol (Merck, Hohenbrunn, Germany), is used as the solvent for sample preparation, as well as for the TDGPC experiment. HDPE SRM 1483 is obtained from the U.S. National Institute of Standards and Technology (Gaithersburg, Md., USA).

LDPE solutions are prepared by dissolving the samples under gentle stirring for three hours at 160°C. The polystyrene standards are dissolved under the same conditions for 30 minutes. The sample concentration is 1.5 mg/mL, and the polystyrene concentrations are 0.2 mg/mL.

A MALS detector measures the scattered signal from polymers or particles in a sample under different scattering angles θ. The basic light scattering equation (from M. Anderson, B. Wittgren, K. G. Wahlund, Anal. Chem. 75, 4279 (2003)) can be written as follows:

$$\sqrt{\frac{Kc}{R_\theta}} = \sqrt{\frac{1}{M} + \frac{16\pi^2}{3\lambda^2}\frac{1}{M}Rg^2 \sin^2\left(\frac{\theta}{2}\right)} ,$$

where $R_\theta$ is the excess Rayleigh ratio, K is an optical constant, which is, among other things, dependent on the specific refractive index increment (*d*n/*d*c), c is the concentration of the solute, M is the molecular weight, $R_g$ is the radius of gyration, and λ is the wavelength of the incident light. Calculation of the molecular weight and radius of gyration from the light scattering data require extrapolation to zero angle (see also P.J. Wyatt, Anal. Chim. Acta 272, 1 (1993)). This is done by plotting $(Kc/R_\theta)^{1/2}$ as a function of $\sin^2(\theta/2)$ in the so-called Debye plot. The molecular weight can be calculated

from the intercept with the ordinate, and the radius of gyration from initial slope of the curve. The second virial coefficient is assumed to be negligible. The intrinsic viscosity numbers are calculated from both the viscosity and concentration detector signals by taking the ratio of the specific viscosity and the concentration at each elution slice.

ASTRA 4.72 (Wyatt Technology Corp.) software is used to collect the signals from the IR detector, the viscometer, and the MALS detector, and to run the calculations.

The calculated molecular weights, e.g. the absolute weight average molecular weight Mw(abs), and absolute molecular weight distribution (e.g., Mw(abs)/Mn(abs)) are obtained using a light scattering constant derived from one or more of the polyethylene standards mentioned and a refractive index concentration coefficient, *d*n/*d*c, of 0.104. Generally, the mass detector response and the light scattering constant should be determined from a linear standard with a molecular weight in excess of about 50,000 Daltons. The viscometer calibration can be accomplished using the methods described by the manufacturer, or alternatively, by using the published values of suitable linear standards such as Standard Reference Materials (SRM) 1475a, 1482a, 1483, or 1484a. The chromatographic concentrations are assumed low enough to eliminate addressing 2nd virial coefficient effects (concentration effects on molecular weight).

The obtained MWD(abs) curve from TDGPC is summarized with three characteristic parameters: the absolute weight average molecular weight Mw(abs), the absolute number average molecular weight Mn(abs), and w, where w is defined as "weight fraction of molecular weight greater than 106 g/mole, based on the total weight of polymer, and as determined by GPC(abs)."

In equation form, the parameters are determined as follows. Numerical integration from the table of "log M" and "dw/d log M" is typically done with the trapezoidal rule:

$$Mw(abs) = \int_{-\infty}^{\infty} M \frac{dw}{dlogM} dlogM \ ,$$

$$Mn(abs) = \frac{1}{\int_{-\infty}^{\infty} \frac{1}{M} \frac{dw}{dlogM} dlogM} \ ,$$

and

$$w = \int_{6}^{\infty} \frac{dw}{dlogM} dlogM \ .$$

<u>Conventional Gel Permeation Chromatography</u>

The gel permeation chromatographic system consists of either a Polymer Laboratories Model PL-210 or a Polymer Laboratories Model PL-220 instrument. The column and carousel compartments are operated at 140°C. Three Polymer Laboratories 10-micron Mixed-B columns are used. The solvent is 1,2,4-trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160° C. The injection volume used is 100 microliters and the flow rate is 1.0 ml/minute.

Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80°C. with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym. Let., 6, 621 (1968)): $M_{polyethylene}$=0.4316 x ($M_{polystyrene}$). Polyethylene equivalent molecular weight calculations are performed using Viscotek TriSEC software Version 3.0.

Number-, weight- and z-average molecular weights are calculated according to the following equations:

$$M_n = \frac{\sum^i Wf_i}{\sum^i \left( Wf_i / M_i \right)}$$

$$M_w = \frac{\sum^i \left( Wf_i * M_i \right)}{\sum^i Wf_i}$$

$$M_z = \frac{\sum^i \left( Wf_i * M_i^2 \right)}{\sum^i Wf_i * M_i}$$

wherein Mn is the number average molecular weight, Mw, is the weight average molecular weight, Mz is the z-average molecular weight, $Wf_i$ is the weight fraction of the molecules with a molecular weight of $M_i$.

Differential Scanning Calorimetry (DSC)

Baseline calibration of the TA DSC Q1000 is performed by using the calibration wizard in the software. First, a baseline is obtained by heating the cell from -80°C to 280°C without any sample in the aluminum DSC pan. After that, sapphire standards are used according to the instructions in the wizard. Then about 1-2 mg of a fresh indium sample is analyzed by heating the sample to 180°C, cooling the sample to 120°C at a cooling rate of 10°C/min, keeping the sample isothermally at 120°C for 1 min, followed by heating the sample from 120°C to 180°C at a heating rate of 10°C/min. The heat of fusion and the onset of melting of the indium sample are determined and checked to be within 0.5°C from 156.6°C for the onset of melting and within 0.5 J/g from 28.71 J/g for the heat of fusion. Then deionized water is analyzed by cooling a small drop of fresh sample in the DSC pan from 25°C to -30°C at a cooling rate of 10°C/min. The sample is kept isothermally at -30°C for 2 minutes and heated to 30°C at a heating rate of 10°C/min. The onset of melting is determined and checked to be within 0.5°C from 0°C. Samples of polymer are then pressed into a thin film at a temperature of 177°F. About 5 to 8 mg of sample is weighed out and placed in a DSC pan. A lid is crimped on the pan to ensure a closed atmosphere. The sample pan is placed in the DSC cell and then heated at a high rate of about 100°C/min to a temperature of about 30°C above the polymer melt temperature. The sample is kept at this temperature for 5 minutes. Then the sample is cooled at a rate of 10°C/min to -40°C, and kept isothermally at that temperature for 5 minutes. Consequently the sample is heated at a rate of 10°C/min until melting is complete to generate a 2$^{nd}$ heating curve. The heat of fusion is obtained from the 2$^{nd}$ heating curves. The % crystallinity for polyethylene resins is calculated using the following equation:

$$\%\ \text{Crystallinity} = \frac{Heat\ of\ fusion\ (J/g)}{292\ J/g}\ x\ 100\%$$

% Transmittance/Absorbance

The transmission/absorption measurements are performed using a Perkin Elmer Lambda 950 scanning double monochromator, capable of scanning from 180 nm to 3000 nm. The instrument is fitted with a 60 mm integrating sphere accessory, allowing total transmittance measurements. In this mode, the spectrometer can measure all light transmitted as well as all forward scattered light for hazy films or coatings. Light that is not transmitted or forward scattered can be measured as light energy deposited in the film at each wavelength. If the transmittance of the film is low at the wavelength of the laser line, substantial laser energy will be absorbed and converted to heat, and the degree of absorption of the film at each wavelength can be measured. The background was collected by placing no film in the entrance aperture to the integrating sphere. The spectral collection conditions were as follows: 5 nm slits, 1 nm/pt, medium scan speed. The films were cut to a size of 2 inch x 2 inch. The films were mounted directly over the entrance port to the integrating sphere

and measured in Absorbance units. At least two regions of each film were measured to determine the absorption at pertinent laser wavelengths. Absorbance units (A) are directly mathematically related to Transmittance (T) (also known as "% transmission" or "% Transmittance" with the following formula:

$$A = 2 - \log_{10} \%T$$

## Claims

1. A polyethylene-based polymer composition suitable for use in a shrink film, the polyethylene-based polymer composition comprising:

   a low density polyethylene having a density of from 0.917 g/cc to 0.935 g/cc, as measured according to ASTM D792, Method B, and melt index, $I_2$, of from 0.1 g/10 min to 5 g/10 min, as measured according to ASTM D1238 at 190°C, 2.16 kg, a linear low density polyethylene having a density of from 0.900 g/cc to 0.965 g/cc, as measured according to ASTM D792, Method B, and melt index, $I_2$, of from 0.05 g/10 min to 15 g/10 min, as measured according to ASTM D1238 at 190°C, 2.16 kg, or combinations thereof;
   a near-infrared absorbent material having the structure;

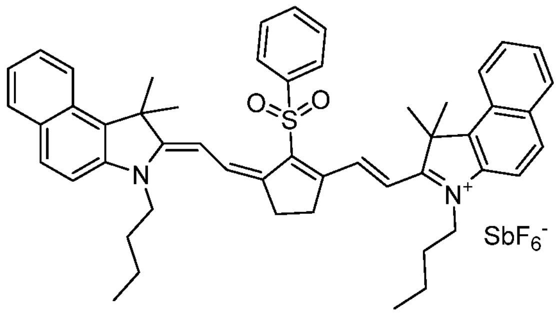

   and
   optionally, a medium density polyethylene, a high density polyethylene, or combinations thereof.

2. The polyethylene-based polymer composition of any of the previous claims, wherein the amount of the near-infrared absorbent material is 0.01 wt.% to 30 wt.%.

3. The polyethylene-based polymer composition of any of the previous claims, wherein the near-infrared absorbent material absorbs radiation at wavelengths of from 700 nm to 3000 nm.

4. The polyethylene-based polymer composition of claim 3, wherein the near-infrared absorbent material comprises a cyanine-based dye.

5. The polyethylene-based polymer composition of claim 1, wherein the amount of the low density polyethylene is from 5 to 100 wt.% and the linear low density polyethylene is from 5 to 100 wt.%.

6. A monolayer film or a multilayer film comprising at least one layer that comprises the polyethylene-based polymer composition of any one of the previous claims.

7. A method of making a monolayer or multilayer film, the method comprising:

   providing a polyethylene-based polymer composition comprising (i) a low density polyethylene having a density of from 0.917 g/cc to 0.935 g/cc, as measured according to ASTM D792, Method B, and melt index, $I_2$, of from 0.1 g/10 min to 5 g/10 min, as measured according to ASTM D1238 at 190°C, 2.16 kg, a linear low density polyethylene having a density of from 0.900 g/cc to 0.965 g/cc, as measured according to ASTM D792, Method B, and melt index, $I_2$, of from 0.05 g/10 min to 15 g/10 min, as measured according to ASTM D1238 at 190°C, 2.16 kg, or combinations thereof; (ii) a near-infrared absorbent material having the structure:

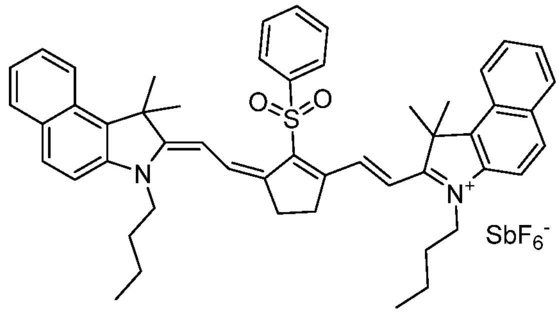

and (iii) optionally, a medium density polyethylene, a high density polyethylene, or combinations thereof; forming a monolayer film or a multilayer film having at least one layer comprising the polyethylene-based polymer composition.

**8.** A multilayer shrink film comprising a core layer and at least one outer layer; and wherein the core layer comprises a low density polyethylene having a density of from 0.917 g/cc to 0.935 g/cc, as measured according to ASTM D792, Method B, and melt index, $I_2$, of from 0.1 g/10 min to 5 g/10 min, as measured according to ASTM D1238 at 190°C, 2.16 kg, and optionally, a linear low density polyethylene, a medium density polyethylene, a high density polyethylene, or combinations thereof; and
wherein the at least one outer layer comprises a near-infrared absorbent material having the structure:

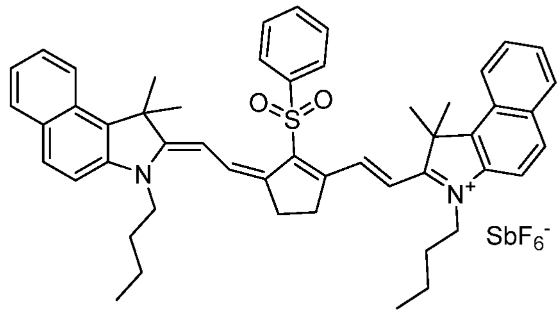

**9.** The film of claim 8, wherein the film comprises from 0.01 wt.% to 30 wt.% of the near-infrared absorbent material.

**10.** The film of claims 8-9, wherein the core layer further comprises an additional near-infrared absorbent material.

**11.** The film of claims 8-10, wherein the near-infrared absorbing material absorbs radiation at wavelengths of from 700 nm to 3000 nm.

**12.** The film of claims 10-11, wherein the near-infrared absorbent material comprises a cyanine-based dye.

**13.** The film of claims 8-12, wherein the film further comprises one or more intermediate layers positioned between the core layer and the at least one outer layer.

**14.** The film of claims 8-13, wherein the core layer comprises from 5 to 100 wt.% of the low density polyethylene.

**15.** The film of claim 14, wherein the core layer further comprises from at least 5 wt.% of the linear low density polyethylene having a density of from 0.900 g/cc to 0.965 g/cc, as measured according to ASTM D792, Method B, and melt index, $I_2$, of from 0.05 g/10 min to 15 g/10 min, as measured according to ASTM D1238 at 190°C, 2.16 kg.

**Patentansprüche**

**1.** Eine Polymerzusammensetzung auf Polyethylenbasis, die zur Verwendung in einer Schrumpffolie geeignet ist, wobei die Polymerzusammensetzung auf Polyethylenbasis Folgendes beinhaltet:

ein Polyethylen niedriger Dichte, das eine Dichte von 0,917 g/cm$^3$ bis 0,935 g/cm$^3$, wie nach ASTM D792,

Verfahren B gemessen, und einen Schmelzindex, $I_2$, von 0,1 g/10 min bis 5g/10 min, wie nach ASTM D1238 bei 190 °C, 2,16 kg gemessen, aufweist, ein lineares Polyethylen niedriger Dichte, das eine Dichte von 0,900 g/cm$^3$ bis 0,965 g/cm$^3$, wie nach ASTM D792, Verfahren B gemessen, und einen Schmelzindex, $I_2$, von 0,05 g/10 min bis 15 g/10 min, wie nach ASTM D1238 bei 190 °C, 2,16 kg gemessen, aufweist, oder Kombinationen davon;
ein Nahinfrarot-absorbierendes Material, das die folgende Struktur aufweist;

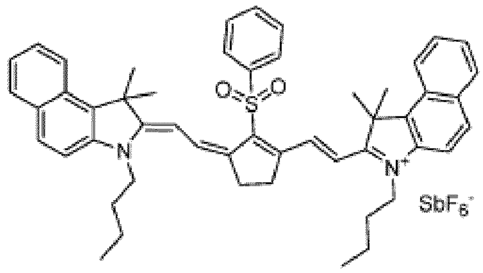

und optional ein Polyethylen mittlerer Dichte, ein Polyethylen hoher Dichte oder Kombinationen davon.

2. Polymerzusammensetzung auf Polyethylenbasis gemäß einem der vorhergehenden Ansprüche, wobei die Menge des Nahinfrarot-absorbierenden Materials 0,01 Gew.-% bis 30 Gew.-% beträgt.

3. Polymerzusammensetzung auf Polyethylenbasis gemäß einem der vorhergehenden Ansprüche, wobei das Nahinfrarot-absorbierende Material Strahlung bei Wellenlängen von 700 nm bis 3000 nm absorbiert.

4. Polymerzusammensetzung auf Polyethylenbasis gemäß Anspruch 3, wobei das Nahinfrarot-absorbierende Material einen Farbstoff auf Cyaninbasis beinhaltet.

5. Polymerzusammensetzung auf Polyethylenbasis gemäß Anspruch 1, wobei die Menge des Polyethylens niedriger Dichte 5 bis 100 Gew.-% und des linearen Polyethylens niedriger Dichte 5 bis 100 Gew.-% beträgt.

6. Eine einschichtige Folie oder eine mehrschichtige Folie, die mindestens eine Schicht beinhaltet, die die Polymerzusammensetzung auf Polyethylenbasis gemäß einem der vorhergehenden Ansprüche beinhaltet.

7. Ein Verfahren zur Herstellung einer einschichtigen oder mehrschichtigen Folie, wobei das Verfahren Folgendes beinhaltet:

Bereitstellen einer Polymerzusammensetzung auf Polyethylenbasis, die Folgendes beinhaltet: (i) ein Polyethylen niedriger Dichte, das eine Dichte von 0,917 g/cm$^3$ bis 0,935 g/cm$^3$, wie nach ASTM D792, Verfahren B gemessen, und einen Schmelzindex, $I_2$, von 0,1 g/10 min bis 5 g/10 min, wie nach ASTM D1238 bei 190 °C, 2,16 kg gemessen, aufweist, ein lineares Polyethylen niedriger Dichte, das eine Dichte von 0,900 g/cm$^3$ bis 0,965 g/cm$^3$, wie nach ASTM D792, Verfahren B gemessen, und einen Schmelzindex, $I_2$, von 0,05 g/10 min bis 15 g/10 min, wie nach ASTM D1238 bei 190 °C, 2,16 kg gemessen, aufweist, oder Kombinationen davon; (ii) ein Nahinfrarot-absorbierendes Material, das die folgende Struktur aufweist:

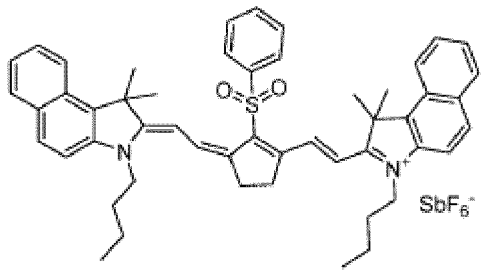

und (iii) optional ein Polyethylen mittlerer Dichte, ein Polyethylen hoher Dichte oder Kombinationen davon;
Bilden einer einschichtigen Folie oder einer mehrschichtigen Folie, die mindestens eine Schicht aufweist, die die Polymerzusammensetzung auf Polyethylenbasis beinhaltet.

**8.** Eine mehrschichtige Schrumpffolie, die eine Kernschicht und mindestens eine Außenschicht beinhaltet; und wobei die Kernschicht Folgendes beinhaltet: ein Polyethylen niedriger Dichte, das eine Dichte von 0,917 g/$cm^3$ bis 0,935 g/$cm^3$, wie nach ASTM D792, Verfahren B gemessen, und einen Schmelzindex, $I_2$, von 0,1 g/10 min bis 5 g/10 min, wie nach ASTM D1238 bei 190 °C, 2,16 kg gemessen, aufweist, und optional ein lineares Polyethylen niedriger Dichte, ein Polyethylen mittlerer Dichte, ein Polyethylen hoher Dichte oder Kombinationen davon; und wobei die mindestens eine Außenschicht ein Nahinfrarot-absorbierendes Material beinhaltet, das die folgende Struktur aufweist:

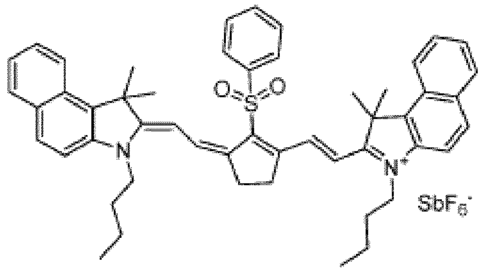

**9.** Folie gemäß Anspruch 8, wobei die Folie zu 0,01 Gew.-% bis 30 Gew.-% das Nahinfrarot-absorbierende Material beinhaltet.

**10.** Folie gemäß den Ansprüchen 8-9, wobei die Kernschicht ferner ein zusätzliches Nahinfrarot-absorbierendes Material beinhaltet.

**11.** Folie gemäß den Ansprüchen 8-10, wobei das Nahinfrarot-absorbierende Material Strahlung bei Wellenlängen von 700 nm bis 3000 nm absorbiert.

**12.** Folie gemäß den Ansprüchen 10-11, wobei das Nahinfrarot-absorbierende Material einen Farbstoff auf Cyaninbasis beinhaltet.

**13.** Folie gemäß den Ansprüchen 8-12, wobei die Folie ferner eine oder mehrere Zwischenschichten beinhaltet, die zwischen der Kernschicht und der mindestens einen Außenschicht angeordnet sind.

**14.** Folie gemäß den Ansprüchen 8-13, wobei die Kernschicht zu 5 bis 100 Gew.-% das Polyethylen niedriger Dichte beinhaltet.

**15.** Folie gemäß Anspruch 14, wobei die Kernschicht ferner zu mindestens 5 Gew.-% das lineare Polyethylen niedriger Dichte beinhaltet, das eine Dichte von 0,900 g/$cm^3$ bis 0,965 g/$cm^3$, wie nach ASTM D792, Verfahren B gemessen, und einen Schmelzindex, $I_2$, von 0,05 g/10 min bis 15 g/10 min, wie nach ASTM D1238 bei 190 °C, 2,16 kg gemessen, aufweist.

## Revendications

**1.** Une composition polymère à base de polyéthylène utilisable dans un film rétractable, la composition polymère à base de polyéthylène comprenant :

un polyéthylène basse densité ayant une masse volumique allant de 0,917 g/$cm^3$ à 0,935 g/$cm^3$, telle que mesurée conformément à l'ASTM D792, Méthode B, et un indice de fusion, $I_2$, allant de 0,1 g/10 min à 5 g/10 min, tel que mesuré conformément à l'ASTM D1238 à 190 °C, 2,16 kg, un polyéthylène basse densité linéaire ayant une masse volumique allant de 0,900 g/$cm^3$ à 0,965 g/$cm^3$, telle que mesurée conformément à l'ASTM D792, Méthode B, et un indice de fusion, $I_2$, allant de 0,05 g/10 min à 15 g/10 min, tel que mesuré conformément à l'ASTM D1238 à 190 °C, 2,16 kg, ou des combinaisons de ceux-ci ;
un matériau absorbant dans le proche infrarouge ayant la structure :

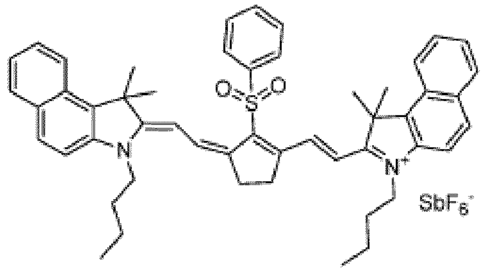

et facultativement, un polyéthylène moyenne densité, un polyéthylène haute densité, ou des combinaisons de ceux-ci.

**2.** La composition polymère à base de polyéthylène de n'importe lesquelles des revendications précédentes, dans laquelle la quantité du matériau absorbant dans le proche infrarouge va de 0,01 % en poids à 30 % en poids.

**3.** La composition polymère à base de polyéthylène de n'importe lesquelles des revendications précédentes, dans laquelle le matériau absorbant dans le proche infrarouge absorbe le rayonnement à des longueurs d'onde allant de 700 nm à 3 000 nm.

**4.** La composition polymère à base de polyéthylène de la revendication 3, dans laquelle le matériau absorbant dans le proche infrarouge comprend un colorant à base de cyanine.

**5.** La composition polymère à base de polyéthylène de la revendication 1, dans laquelle la quantité du polyéthylène basse densité va de 5 à 100 % en poids et du polyéthylène basse densité linéaire va de 5 à 100 % en poids.

**6.** Un film monocouche ou un film multicouche comprenant au moins une couche qui comprend la composition polymère à base de polyéthylène de n'importe laquelle des revendications précédentes.

**7.** Un procédé de fabrication d'un film monocouche ou multicouche, le procédé comprenant :

la fourniture d'une composition polymère à base de polyéthylène comprenant (i) un polyéthylène basse densité ayant une masse volumique allant de 0,917 g/cm$^3$ à 0,935 g/cm$^3$, telle que mesurée conformément à l'ASTM D792, Méthode B, et un indice de fusion, $I_2$, allant de 0,1 g/10 min à 5 g/10 min, tel que mesuré conformément à l'ASTM D1238 à 190 °C, 2,16 kg, un polyéthylène basse densité linéaire ayant une masse volumique allant de 0,900 g/cm$^3$ à 0,965 g/cm$^3$, telle que mesurée conformément à l'ASTM D792, Méthode B, et un indice de fusion, $I_2$, allant de 0,05 g/10 min à 15 g/10 min, tel que mesuré conformément à l'ASTM D1238 à 190 °C, 2,16 kg, ou des combinaisons de ceux-ci ; (ii) un matériau absorbant dans le proche infrarouge ayant la structure :

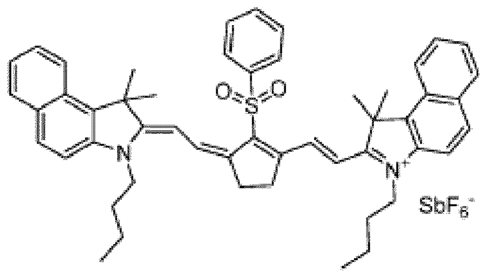

et (iii) facultativement, un polyéthylène moyenne densité, un polyéthylène haute densité, ou des combinaisons de ceux-ci ;
la formation d'un film monocouche ou d'un film multicouche ayant au moins une couche comprenant la composition polymère à base de polyéthylène.

**8.** Un film rétractable multicouche comprenant une couche centrale et au moins une couche extérieure ; et
dans lequel la couche centrale comprend un polyéthylène basse densité ayant une masse volumique allant de 0,917 g/cm$^3$ à 0,935 g/cm$^3$, telle que mesurée conformément à l'ASTM D792, Méthode B, et un indice de fusion, $I_2$, allant de 0,1 g/10 min à 5 g/10 min, tel que mesuré conformément à l'ASTM D1238 à 190 °C, 2,16 kg, et facultativement,

un polyéthylène basse densité linéaire, un polyéthylène moyenne densité, un polyéthylène haute densité, ou des combinaisons de ceux-ci ; et dans lequel l'au moins une couche extérieure comprend un matériau absorbant dans le proche infrarouge ayant la structure :

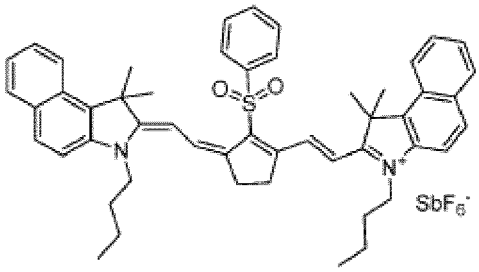

**9.** Le film de la revendication 8, le film comprenant de 0,01 % en poids à 30 % en poids du matériau absorbant dans le proche infrarouge.

**10.** Le film des revendications 8 à 9, dans lequel la couche centrale comprend en outre un matériau absorbant dans le proche infrarouge supplémentaire.

**11.** Le film des revendications 8 à 10, dans lequel le matériau absorbant dans le proche infrarouge absorbe le rayonnement à des longueurs d'onde allant de 700 nm à 3 000 nm.

**12.** Le film des revendications 10 à 11, dans lequel le matériau absorbant dans le proche infrarouge comprend un colorant à base de cyanine.

**13.** Le film des revendications 8 à 12, le film comprenant en outre une ou plusieurs couches intermédiaires positionnées entre la couche centrale et l'au moins une couche extérieure.

**14.** Le film des revendications 8 à 13, dans lequel la couche centrale comprend de 5 à 100 % en poids du polyéthylène basse densité.

**15.** Le film de la revendication 14, dans lequel la couche centrale comprend en outre au moins 5 % en poids du polyéthylène basse densité linéaire ayant une masse volumique allant de 0,900 g/cm$^3$ à 0,965 g/cm$^3$, telle que mesurée conformément à l'ASTM D792, Méthode B, et un indice de fusion, $I_2$, allant de 0,05 g/10 min à 15 g/10 min, tel que mesuré conformément à l'ASTM D1238 à 190 °C, 2,16 kg.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4599392 A
- WO 2005023912 PCT
- WO 2014051682 A
- WO 2011019563 A
- US 7498282 B
- US 5272236 A
- US 5278272 A
- US 5582923 A
- US 5733155 A
- EP 2653392 A
- US 3645992 A
- US 4076698 A
- US 3914342 A
- US 5854045 A
- WO 2005111291 A1
- WO 2006045501 A
- WO 2008104371 A
- US 8372931 B
- US 4352915 A
- US 5925448 A
- US 6445642 B
- EP 2653392 A1
- US 20040054097 A
- US 20140255674 A
- US 7812094 B
- US 6545088 B, Kolthammer
- US 6538070 B, Cardwell
- US 6566446 B, Parikh
- US 5844045 A, Kolthammer
- US 5869575 A, Kolthammer
- US 6448341 B, Kolthammer
- WO 2002096622 A
- US 4957790 A
- US 5055328 A, Evert
- US 20110003940 A
- US 3456044 A, Pahlke
- US 4352849 A, Mueller
- US 4820557 A
- US 4837084 A, Warren
- US 4865902 A, Golike
- US 4927708 A, Herran
- US 4952451 A, Mueller
- US 4963419 A
- US 5059481 A, Lustig
- US 3545165 A
- US 62085781


### Non-patent literature cited in the description


- **RANDALL.** *Rev. Macromol. Chem. Phys.,* vol. C29 (2 & 3), 285-297
- **ZIMM, B. H. ; STOCKMAYER, W. H.** *J. Chem. Phys.,* 1949, vol. 17, 1301
- **RUDIN A.** Modern Methods of Polymer Characterization. John Wiley & Sons, 1991, 103-112
- **N. NARAYAN et al.** *J. Org. Chem.,* 1995, vol. 60, 2391-2395
- Film Processing. 2013
- **ZWEIFEL HANS et al.** Plastics Additives Handbook. Hanser Gardner Publications, 2001
- **Y. JIN ; T. HERMEL-DAVIDOCK ; T. KARJALA ; M. DEMIROrS ; J. WANG ; E. LEYVA ; D. ALLEN.** Shrink Force Measurement of Low Shrink Force Films. *SPE ANTEC Proceedings,* 2008, 1264
- **M. ANDERSON ; B. WITTGREN ; K. G. WAHLUND.** *Anal. Chem.,* 2003, vol. 75, 4279
- **P.J. WYATT.** *Anal. Chim. Acta,* 1993, vol. 272, 1
- **WILLIAMS ; WARD.** *J. Polym. Sci., Polym. Let.,* 1968, vol. 6, 621